# EUROPEAN PATENT APPLICATION

(11) **EP 4 823 190 A1**
(43) Date of publication of application: **14.10.2026**
(21) Application number: 25738424.8
(22) Date of filing: 07.01.2025
(51) Int. Cl.: H04W 52/02

(54) **COMMUNICATION METHOD, DEVICE, STORAGE MEDIUM AND PROGRAM PRODUCT**

(30) Priority: 08.01.2024 CN 202410031988
(71) Applicant: Honor Device Co., Ltd., Shenzhen, Guangdong 518040 (CN)
(72) Inventor: ZHANG, Mingzhu, Shenzhen, Guangdong 518040 (CN)
(74) Representative: Goddar, Heinz J.
(86) International application number: PCT/CN2025/071137
(87) International publication number: WO 2025/148894

(57) **Abstract**

Embodiments of this application provide a communication method and device, a storage medium, and a program product, and relate to the field of communication technologies. The method includes: receiving first indication information, where the first indication information is used for indicating offset information of a discontinuous reception timer, and the offset information is related to a start moment of one or more discontinuous reception timers; and monitoring a downlink control channel at start time of the discontinuous reception timer. In the foregoing method, a terminal device shifts a start moment of a timer by receiving offset information of the timer, so that time at which the terminal device enters an active state is more flexible, thereby better supporting an XR service and reducing power consumption of the terminal device.

## Description

This application claims priority to Chinese Patent Application No. 202410031988.1, filed with the China National Intellectual Property Administration on January 8, 2024 and entitled "COMMUNICATION METHOD AND DEVICE, STORAGE MEDIUM, AND PROGRAM PRODUCT", which is incorporated herein by reference in its entirety.

### TECHNICAL FIELD

This application relates to the field of communication technologies, and in particular, to a communication method and device, a storage medium, and a program product

### BACKGROUND

To reduce power consumption of a terminal device, a discontinuous reception (discontinuous reception, DRX) mode is introduced in a related technology. In the DRX mode, the terminal device cyclically enters an active state and monitors a physical downlink control channel (physical downlink control channel, PDCCH), to reduce power consumption.

In a wireless communication system, an extended reality (extended reality, XR) technology has features such as multi-view angles and strong interactivity, and can provide brand new experience for a user. In some scenarios, when the terminal device receives XR data in the DRX mode, a DRX cycle of the terminal device does not match a service cycle of XR, and when a network device sends XR data, the terminal device cannot enter the active state to receive the XR data.

Therefore, how to enable time at which the terminal device enters the active state to be more flexible, to better support an XR service and reduce power consumption of the terminal device becomes a problem to be urgently resolved.

### SUMMARY

Embodiments of this application provide a communication method and device, a storage medium, and a program product. Time at which a terminal device enters an active state is more flexible by using offset information, thereby better supporting an XR service and reducing power consumption of the terminal device.

According to a first aspect, an embodiment of this application provides a communication method. The method includes: receiving first indication information, where the first indication information is used for indicating offset information of a discontinuous reception timer, and the offset information is related to a start moment of one or more discontinuous reception timers; and
monitoring a downlink control channel at start time of the discontinuous reception timer.

In an optional embodiment of the first aspect, the offset information includes a first offset of a start moment of the discontinuous reception timer.

In an optional embodiment of the first aspect, the method further includes:
receiving second indication information, where the second indication information is used for indicating to use the first offset.

In an optional embodiment of the first aspect, the first indication information is further used for indicating the first offset in a next discontinuous reception timer when the first indication information is received; or
the first indication information is further used for indicating to use the first offset in next N discontinuous reception timers when the first indication information is received, where N is an integer greater than 1.

In an optional embodiment of the first aspect, the second indication information is further used for indicating to use the first offset in a next discontinuous reception timer when the second indication information is received; or
the second indication information is further used for indicating to use the first offset in next N discontinuous reception timers when the second indication information is received, where N is an integer greater than 1.

In an optional embodiment of the first aspect, the method further includes:
determining a start moment of the discontinuous reception timer based on the first offset, or determining a start moment of the discontinuous reception timer based on the first offset and a first preset offset.

In an optional embodiment of the first aspect, the offset information is further used for indicating to shift the start moment of the discontinuous reception timer forward, or shift the start moment of the discontinuous reception timer backward.

In an optional embodiment of the first aspect, the method further includes:
after a subframe of a discontinuous reception cycle starts, performing shifting by the first offset or performing shifting by the first offset and the first preset offset, and starting the discontinuous reception timer, where the subframe is determined based on a configuration of the discontinuous reception cycle.

In an optional embodiment of the first aspect, a time unit granularity of the first offset includes any one of the following:
a millisecond, a subframe, a slot, and a symbol.

In an optional embodiment of the first aspect, the method further includes:
configuring a new timer to replace the discontinuous reception timer.

According to a second aspect, an embodiment of this application provides a communication method. The method includes: receiving third indication information, where the third indication information is used for indicating start time information of a discontinuous reception cycle, and the start time information is related to a start moment of one or more discontinuous reception cycles.

In an optional embodiment of the second aspect, the start time information includes offset information of a start moment of the discontinuous reception cycle, or start moment information of the discontinuous reception cycle.

In an optional embodiment of the second aspect, the offset information includes a second offset of the start moment of the discontinuous reception cycle.

In an optional embodiment of the second aspect, the start moment information includes a target start moment of the discontinuous reception cycle.

In an optional embodiment of the second aspect, the method further includes:
receiving fourth indication information, where the fourth indication information is used for indicating to use the second offset or use the target start moment.

In an optional embodiment of the second aspect, the third indication information is further used for indicating to use the second offset or use the target start moment in a next discontinuous reception cycle when the third indication information is received; or
the third indication information is further used for indicating to use the second offset or use the target start moment in next M discontinuous reception cycles when the third indication information is received, where M is an integer greater than 1.

In an optional embodiment of the second aspect, the fourth indication information is further used for indicating to use the second offset or use the target start moment in a next discontinuous reception cycle when the fourth indication information is received; or
the fourth indication information is further used for indicating to use the second offset or use the target start moment in next M discontinuous reception cycles when the fourth indication information is received, where M is an integer greater than 1.

In an optional embodiment of the second aspect, the method further includes:
determining a start moment of the discontinuous reception cycle based on the second offset or the target start moment; or
determining a start moment of the discontinuous reception cycle based on the second offset and a second preset offset or based on the target start moment and a second preset offset.

In an optional embodiment of the second aspect, a time unit granularity of the second offset includes any one of the following:
a millisecond, a subframe, a slot, and a symbol.

In an optional embodiment of the second aspect, the method further includes:
starting a discontinuous reception timer in the discontinuous reception cycle.

In an optional embodiment of the second aspect, the method further includes:
determining, based on a configuration parameter of the discontinuous reception cycle and the second offset, whether to start the discontinuous reception timer, where the configuration parameter includes at least one of a cycle configuration, a system frame number, a subframe number, a cycle type, a slot offset of a cycle, and system frame reference time.

According to a third aspect, an embodiment of this application provides a communication method. The method includes: sending first indication information, where the first indication information is used for indicating offset information of a discontinuous reception timer, and the offset information is related to a start moment of one or more discontinuous reception timers.

In an optional embodiment of the third aspect, the offset information includes a first offset of a start moment of the discontinuous reception timer.

In an optional embodiment of the third aspect, the method further includes:
sending second indication information, where the second indication information is used for indicating to use the first offset.

In an optional embodiment of the third aspect, the first indication information is further used for indicating the first offset in a next discontinuous reception timer when the first indication information is received; or
the first indication information is further used for indicating to use the first offset in next N discontinuous reception timers when the first indication information is received, where N is an integer greater than 1.

In an optional embodiment of the third aspect, the second indication information is further used for indicating to use the first offset in a next discontinuous reception timer when the second indication information is received; or
the second indication information is further used for indicating to use the first offset in next N discontinuous reception timers when the second indication information is received, where N is an integer greater than 1.

In an optional embodiment of the third aspect, the offset information is further used for indicating to shift the start moment of the discontinuous reception timer forward, or shift the start moment of the discontinuous reception timer backward.

In an optional embodiment of the third aspect, a time unit granularity of the first offset includes any one of the following:
a millisecond, a subframe, a slot, and a symbol.

According to a fourth aspect, an embodiment of this application provides a communication method. The method includes: sending third indication information, where the third indication information is used for indicating start time information of a discontinuous reception cycle, and the start time information is related to a start moment of one or more discontinuous reception cycles.

In an optional embodiment of the fourth aspect, the start time information includes offset information of a start moment of the discontinuous reception cycle, or start moment information of the discontinuous reception cycle.

In an optional embodiment of the fourth aspect, the offset information includes a second offset of the start moment of the discontinuous reception cycle.

In an optional embodiment of the fourth aspect, the start moment information includes a target start moment of the discontinuous reception cycle.

In an optional embodiment of the fourth aspect, the method further includes:
sending fourth indication information, where the fourth indication information is used for indicating to use the second offset or use the target start moment.

In an optional embodiment of the fourth aspect, the third indication information is further used for indicating to use the second offset or use the target start moment in a next discontinuous reception cycle when the third indication information is received; or
the third indication information is further used for indicating to use the second offset or use the target start moment in next M discontinuous reception cycles when the third indication information is received, where M is an integer greater than 1.

In an optional embodiment of the fourth aspect, the fourth indication information is further used for indicating to use the second offset or use the target start moment in a next discontinuous reception cycle when the fourth indication information is received; or
the fourth indication information is further used for indicating to use the second offset or use the target start moment in next M discontinuous reception cycles when the fourth indication information is received, where M is an integer greater than 1.

In an optional embodiment of the fourth aspect, a time unit granularity of the second offset includes any one of the following:
a millisecond, a subframe, a slot, and a symbol.

According to a fifth aspect, an embodiment of this application provides a communication apparatus, including:
a receiving module, configured to receive first indication information, where the first indication information is used for indicating offset information of a discontinuous reception timer, and the offset information is related to a start moment of one or more discontinuous reception timers; and
a processing module, configured to monitor a downlink control channel at start time of the discontinuous reception timer.

According to a sixth aspect, an embodiment of this application provides a communication apparatus, including:
a receiving module, configured to receive third indication information, where the third indication information is used for indicating offset information of a discontinuous reception cycle, and the offset information is related to a start moment of one or more discontinuous reception cycles.

According to a seventh aspect, an embodiment of this application provides a communication apparatus, including:
a sending module, configured to send first indication information, where the first indication information is used for indicating offset information of a discontinuous reception timer, and the offset information is related to a start moment of one or more discontinuous reception timers.

According to an eighth aspect, an embodiment of this application provides a communication apparatus, including:
a sending module, configured to receive third indication information, where the third indication information is used for indicating start time information of a discontinuous reception cycle, and the start time information is related to a start moment of one or more discontinuous reception cycles.

According to a ninth aspect, an embodiment of this application provides a communication device, including a processor and a memory. The memory stores computer-executable instructions. The processor executes the computer-executable instructions stored in the memory, to cause the communication device to perform the method according to the first aspect or the second aspect.

According to an eleventh aspect, an embodiment of this application provides a communication device, including a processor and a memory. The memory stores computer-executable instructions. The processor executes the computer-executable instructions stored in the memory, to cause the communication device to perform the method according to the third aspect or the fourth aspect.

According to a twelfth aspect, an embodiment of this application provides a computer-readable storage medium, storing a computer program. When the computer program is executed by a processor, the method according to any one of the first aspect to the fourth aspect is implemented.

According to a thirteenth aspect, an embodiment of this application provides a computer program product. The computer program product includes a computer program. When the computer program is run, a computer is caused to perform the method according to any one of the first aspect to the fourth aspect.

According to a fourteenth aspect, an embodiment of this application provides a chip. The chip includes a processor. The processor is configured to invoke a computer program in a memory, to perform the method according to any one of the first aspect to the fourth aspect.

Embodiments of this application provide a communication method and device, a storage medium, and a program product. The method includes: receiving first indication information, where the first indication information is used for indicating offset information of a discontinuous reception timer, and the offset information is related to a start moment of one or more discontinuous reception timers; and monitoring a downlink control channel at start time of the discontinuous reception timer. In the foregoing method, a terminal device shifts a start moment of a timer by receiving offset information of the timer, so that time at which the terminal device enters an active state is more flexible, thereby better supporting an XR service and reducing power consumption of the terminal device.

### BRIEF DESCRIPTION OF DRAWINGS

FIG. 1 is a diagram of an architecture of a communication system according to an embodiment of this application;
FIG. 2 is a schematic diagram of a DRX cycle according to an embodiment of this application;
FIG. 3 is a schematic diagram of jitter on XR data according to an embodiment of this application;
FIG. 4 is a schematic flowchart 1 of a communication method according to an embodiment of this application;
FIG. 5 is a schematic diagram of shifting a start moment of a timer backward according to an embodiment of this application;
FIG. 6A is a schematic diagram of shifting a start moment of a timer forward according to an embodiment of this application;
FIG. 6B is a schematic diagram of using a start moment of a T2 timer according to an embodiment of this application;
FIG. 7 is a schematic flowchart 2 of a communication method according to an embodiment of this application;
FIG. 8 is a schematic flowchart 3 of a communication method according to an embodiment of this application;
FIG. 9 is a schematic diagram 1 of shifting a start moment of a cycle according to an embodiment of this application;
FIG. 10 is a schematic diagram 2 of shifting a start moment of a cycle according to an embodiment of this application;
FIG. 11 is a schematic flowchart 4 of a communication method according to an embodiment of this application;
FIG. 12 is a schematic diagram 1 of a structure of a communication apparatus according to an embodiment of this application;
FIG. 13 is a schematic diagram 2 of a structure of a communication apparatus according to an embodiment of this application;
FIG. 14 is a schematic diagram 3 of a structure of a communication apparatus according to an embodiment of this application;
FIG. 15 is a schematic diagram 4 of a hardware structure of a communication apparatus according to an embodiment of this application; and
FIG. 16 is a schematic diagram of a hardware structure of a communication device according to an embodiment of this application.

### DESCRIPTION OF EMBODIMENTS

To clearly describe the technical solutions of embodiments of this application, in the embodiments of this application, the words such as "example" and "for example" are used to represent examples, illustrations or descriptions. Any embodiment or design solution described as "example" or "for example" in this application should not be construed as being preferred or advantageous over other embodiments or design solutions. Exactly, use of the term "exemplary" or "for example" is intended to present a concept in a specific manner.

In the embodiments of this application, "at least one" refers to one or more, and "a plurality of" refers to two or more. "And/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof refers to any combination of these items, including any combination of singular items (pieces) or plural items (pieces). For example, at least one of a, b, or c may represent a, b, c, "a and b", "a and c", "b and c", or "a, b, and c", where a, b, and c may be singular or plural.

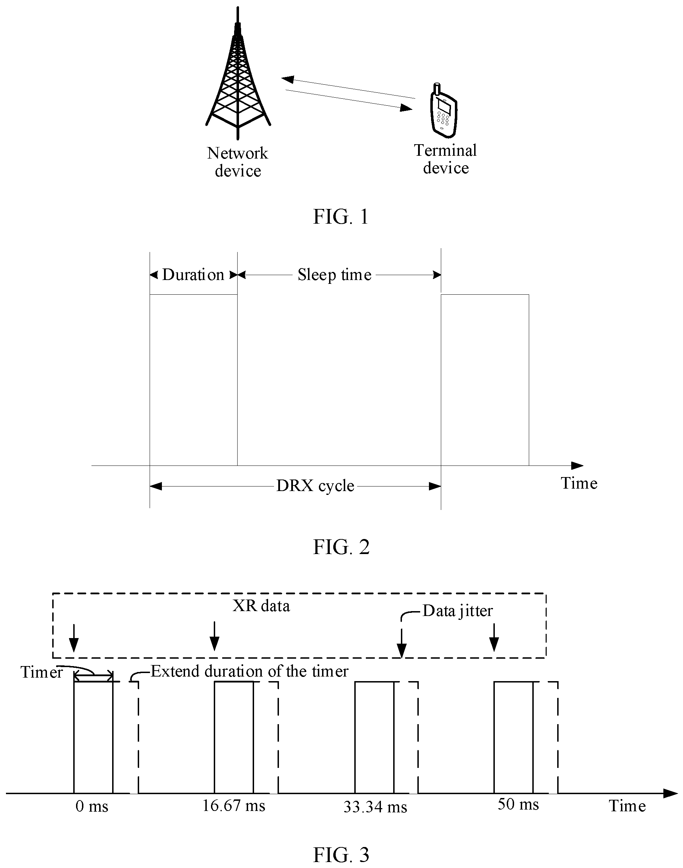

For example, the method and apparatus provided in the embodiments of this application may be applied to a communication system. FIG. 1 is a schematic diagram of a structure of a communication system. The communication system 100 includes a network device 110 and a terminal device 120. The communication system 100 includes one or more network devices and one or more terminal devices communicating with the one or more network devices. It may be understood that the network device and the terminal may also be referred to as communication devices

The technical solutions in the embodiments of this application may be applied to various communication systems, for example, a long term evolution (long term evolution, LTE) system, an LTE frequency division duplex (frequency division duplex, FDD) system, an LTE time division duplex (time division duplex, TDD) system, a long time evolution advanced (long term evolution advanced, LTE-A) system, a universal mobile telecommunication system (universal mobile telecommunication system, UMTS), a worldwide interoperability for microwave access (worldwide interoperability for microwave access, WiMAX) system, a 5G new radio (new radio, NR) system, and an evolved communication system, such as a 6th generation (6th generation, 6G) communication system. The plurality of systems may include the terminal device and the network device. The system may further include a core network part, such as an evolved packet system (evolved packet system, EPS), or a 5G system (5GS).

The terminal device mentioned in the embodiments of this application may refer to a device that provides a user with voice and/or data connectivity, a handheld device with a radio connection function, or another processing device connected to a wireless modem. In different systems, names of terminal devices may be different. For example, in a 5G system, the terminal device may be referred to as user equipment (User Equipment, UE). The terminal device may be a USB storage device, another personal computer, a memory device, and an encryption dog. Alternatively, the terminal device may communicate with one or more core networks (Core Network, CN) through a radio access network (Radio Access Network, RAN). The terminal device may be a mobile terminal device, such as a mobile phone (also referred to as a "cellular" phone) and a computer with a mobile terminal device, for example, may be a portable, pocket-sized, handheld, computer built-in, or vehicle-mounted mobile apparatus, which exchanges voice and/or data with the radio access network. For example, the terminal device may be a device such as a personal communication service (personal communication service, PCS) phone, a cordless telephone set, a session initiation protocol (session initiated protocol, SIP) phone, a wireless local loop (wireless local loop, WLL) station, a personal digital assistant (personal digital assistant, PDA), a personal computer, a tablet computer, a machine-type communication (machine-type communication) terminal device, an augmented reality (augmented reality) device/a virtual reality (virtual reality, VR) device, a wearable device (wearable device), or a vehicle-mounted device (VUE). The terminal device may also be referred to as a system, a subscriber unit (subscriber unit), a subscriber station (subscriber station), a mobile station (mobile station), a mobile (mobile), a remote station (remote station), an access point (access point), a remote terminal device (remote terminal), an access terminal device (access terminal), a user terminal device (user terminal), a user agent (user agent), a user device (user device), a wireless access device and a router/a modem that meet limitations of this definition, or the like. This is not limited in the embodiments of this application.

The network device in the embodiments of this application may be referred as an access network device, a radio access network device, a radio access network (radio access network, RAN), a radio access network function, a radio access network unit, or the like. The access network device may include a base station, a WLAN access point, and the like. The base station may include one or more cells serving the terminal device. Based on different specific application scenarios, the base station may also be referred to as an access point, may be a device communicating with a wireless terminal device on an air interface by using one or more sectors in an access network, or may have another name. For example, the network device in the embodiments of this application may be an evolved network device (evolutional NodeB, eNB or e-NodeB) in a long term evolution (long term evolution, LTE) system, a 5G base station (gNB) in a 5G network architecture, or the like, or may be a home evolved NodeB (home evolved NodeB, HeNB), a relay node (relay node), a home base station (femto), a pico base station (pico), a network test device, or some other suitable terms in the field. As long as the same technical effect is achieved, the base station is not limited to a specific technical word, and is not limited in the embodiments of this application. In some network structures, the network device may include a central unit (centralized unit, CU) node and a distributed unit (distributed unit, DU) node. The central unit and the distributed unit may alternatively be geographically separate.

In many cases, the terminal device does not need to always interact with the network device. Therefore, it is a waste of power consumption that the terminal device always monitors a downlink PDCCH.

To reduce power consumption of the terminal device, a DRX mode is introduced in a related technology. The network device may deliver a DRX configuration to the terminal device, so that the terminal device may enter a DRX cycle without scheduling transmission in a period of time. In the DRX cycle, the terminal device may cyclically enter a sleep state in a sleep period, stop monitoring a PDCCH, and be woken up from the sleep state in an active period in which monitoring needs to be performed, thereby reducing power consumption. When configuring a DRX mode for the terminal device, the network device may also configure a corresponding DRX cycle for the terminal device. It may be understood that, in this application, the DRX mode may also be referred to as a DRX mechanism.

FIG. 2 is a schematic diagram of a DRX cycle. As shown in FIG. 2, one DRX cycle includes duration (on duration for DRX, which is also referred to as an active period) and sleep time (opportunity for DRX, which is also referred to as a sleep period). The terminal device is woken up from a sleep state within the duration and monitors a downlink PDCCH. The duration may be counted by using a timer. When the timer is run, the terminal device monitors the downlink PDCCH. The timer may be a drx-on duration timer. The terminal device enters the sleep state at the sleep time, and stops monitoring the PDCCH. The DRX cycle in the embodiments of this application may also be referred to as a cycle for short. This is not distinguished in the embodiments of this application. That the terminal device is woken up from the sleep state within the duration may also be referred to as that the terminal device enters an active state. In this application, the timer may also be referred to as a timer.

The following describes some terms involved in DRX.

drx-duration timer (drx-on duration timer): Duration at the beginning of a DRX cycle (the duration at the beginning of a DRX cycle).

drx-inactivity timer (drx-inactivity timer): Duration after a PDCCH event occurs, where the PDCCH event indicates that there is a new uplink (up link, UL), downlink (down link, DL), or sidelink (side link, SL) transmission for a MAC entity (the duration after the PDCCH occasion in which a PDCCH indicates a new UL, DL, or SL transmission for the MAC entity).

drx-retransmission timer DL (drx-retransmission timer DL) (per DL hybrid automatic repeat request (hybrid automatic repeat request, HARQ) process except for a broadcast process (per DL HARQ process except for the broadcast process)): Maximum duration until DL retransmission is received (the maximum duration until a DL retransmission is received).

drx-retransmission timer UL (drx-retransmission timer UL) (per UL HARQ process (per UL HARQ process)): Maximum duration until a grant for a UL retransmission is received (the maximum duration until a grant for UL retransmission is received).

drx-HARQ-round-trip time (round-trip time, RTT) timer (drx-harq-rtt-timer DL) (per DL HARQ process except for a broadcast process (per DL HARQ process except for the broadcast process)): Minimum duration before a DL assignment for a HARQ retransmission is expected by a MAC entity (the minimum duration before a DL assignment for HARQ retransmission is expected by the MAC entity).

drx-hybrid automatic repeat request round-trip time timer UL (drx-harq-rtt-timer UL) (per UL HARQ process (per UL HARQ process)): Minimum duration before a UL HARQ retransmission is expected by the MAC entity (the minimum duration before a UL HARQ retransmission grant is expected by the MAC entity).

drx-retransmission timer SL (drx-retransmission timer SL) (per UL HARQ process (per SL HARQ process)): Maximum duration until a grant for an SL retransmission is received (the maximum duration until a grant for SL retransmission is received).

drx-hybrid automatic repeat request round-trip time timer SL (drx-harq-rtt-timer SL) (per SL HARQ process) (per SL HARQ process)): Minimum duration before an SL retransmission is expected by the MAC entity (the minimum duration before an SL retransmission grant is expected by the MAC entity).

Drx-slot offset (drx-SlotOffset): A delay before a drx-on Duration Timer is started (the delay before starting the drx-on Duration Timer).

drx-long cycle start offset (drx-LongCycle StartOffset): drx long cycle and drx-startoffset define subframes where a long DRX cycle and a short DRX cycle start (the Long DRX cycle and drx-StartOffset which defines the subframe where the Long and Short DRX cycle starts).

drx non-integer long cycle start offset (drx-NonInteger Long Cycle StartOffset) (optional): When lengths/a length of a long DRX cycle and/or a short DRX cycle are/is rational numbers/a rational number, the long DRX cycle and DRX-StartOffset define subframes where the long DRX cycle and the short DRX cycle start (the Long DRX cycle and drx-StartOffset which defines the subframe where the Long and Short DRX cycle start, when the length of the Long DRX cycle and/or the short DRX cycle is a rational number).

DRX active time:
When DRX is configured, active time for a serving cell in a DRX group includes the following time (When DRX is configured, the Active Time for Serving Cells in a DRX group includes the time while):
DRX-ondurationtimer or DRX-inactivitytimer configured for the DRX group is running (drx-onDurationTimer or drx-InactivityTimer configured for the DRX group is running); or
drx-RetransmissionTimerDL, drx-RetransmissionTimerUL, or drx-RetransmissionTimerSL is running on any serving cell in the DRX group (drx-RetransmissionTimerDL, drx-RetransmissionTimerUL or drx-RetransmissionTimerSL is running on any Serving Cell in the DRX group); or
ra-ContentionResolutionTimer (as described in clause 5.1.5) or msgB-ResponseWindow (as described in clause 5.1.4a) is running (ra-ContentionResolutionTimer (as described in clause 5.1.5) or msgB-ResponseWindow (as described in clause 5.1.4a) is running); or
a scheduling request is sent on a PUCCH and is pending (as described in clause 5.4.4 or 5.22.1.5). If the serving cell is a part of a non-terrestrial network, the active time is started after a scheduling request transmission that is performed when SR_COUNTER is 0 for all SR configurations with pending SR(s) plus UE-gNB RTT (a Scheduling Request is sent on PUCCH and is pending (as described in clause 5.4.4 or 5.22.1.5). If this Serving Cell is part of a non-terrestrial network, the Active Time is started after the Scheduling Request transmission that is performed when the SR_COUNTER is 0 for all the SR configurations with pending SR(s) plus the UE-gNB RTT); or
when a random access response for random access is successfully received, a PDCCH indicating that a new transmission address is a C-RNTI of the MAC entity has not been received, and among contention-based random access, a preamble is not selected by the MAC entity (as described in clauses 5.1.4 and 5.1.4a) (a PDCCH indicating a new transmission addressed to the C-RNTI of the MAC entity has not been received after successful reception of a Random Access Response for the Random Access Preamble not selected by the MAC entity among the contention-based Random Access Preamble (as described in clauses 5.1.4 and 5.1.4a)).

In a wireless communication system, an XR technology has features such as multi-view angles and strong interactivity, can provide brand new experience for a user, and has great application value and commercial potential. XR includes technologies such as VR, AR, and mixed reality (mixed reality, MR), and can be widely applied to various fields such as entertainment, gaming, medical treatment, advertising, industry, online education, and engineering. The VR technology mainly refers to rendering of a visual scene and an audio scene, to simulate, as much as possible, sensory stimulation of visual and audio in the real world to a user. The AR technology mainly refers to providing visual and/or auditory additional information or manually generated content in a real environment perceived by a user. The user may directly obtain the real environment (for example, not perform sensing, processing, or rendering) or indirectly obtain the real environment (for example, perform transmission in a manner like a sensor). The MR technology enhances sense of reality of user experience by introducing reality scenario information to a virtual environment, and establishing an information loop of interaction feedback between the virtual world, the real world, and a user.

In the related technology, XR downlink service data (XR data for short) may be cyclically delivered. A terminal device is woken up from a sleep state (the terminal device enters an active state) within duration of a DRX cycle to receive the XR data. In other words, a cycle of delivering the XR data matches the duration of the DRX cycle.

However, XR service data does not strictly cyclically arrive, and arrival time in each cycle may be jitter within a particular range. For example, the XR service data arrives in advance or later in time of a cycle. In this case, the terminal device may miss the XR data sent by a network device within the duration of the DRX cycle. Therefore, an existing DRX mechanism does not take jitter into account and cannot be adapted to a situation of an XR service.

To resolve the jitter problem, in a related technology, longer start time (which may also be referred to as duration) may be configured for one or more timers (for example, the timer may be an on-duration timer) of all DRX cycles, to better perform monitoring. However, jitter does not occur on all data. As shown in FIG. 3, jitter occurs on XR data backward only in a 3^{rd} cycle, for example, data arrives after duration of the cycle ends, and jitter does not occur on remaining cycles. Therefore, considering data jitter, duration of timers in all DRX cycles is delayed. However, in a cycle in which jitter does not occur on the XR data, excessive duration causes a waste of power consumption of the terminal device, and an energy saving effect cannot be effectively achieved.

Therefore, how to enable duration of a DRX cycle to be more flexible, so that the DRX cycle can better support an XR jitter scenario, to reduce power consumption of the terminal device becomes a problem to be urgently resolved.

In view of this, an embodiment of this application provides a communication method. For a cycle in which jitter occurs on XR data, a network device may send offset information or time information of the cycle to a terminal device, and the terminal device may adjust, based on the received offset information or time information of the cycle, duration of a DRX cycle corresponding to the cycle in which jitter occurs on the XR data, so that the duration of the DRX is more flexible, and DRX better supports a scenario in which jitter occurs on the XR data, thereby reducing power consumption of the terminal device.

The network device sends the offset information to the terminal device, and the terminal device may receive the offset information and adjust the duration of the DRX cycle in the following several manners.

In a first manner, the network device sends offset information of a start moment of a timer to the terminal device, and when receiving the offset information, the terminal device may shift a start moment of a timer in one or more DRX cycles based on the offset information, so that the duration of the DRX cycle matches transmission of the XR data on which jitter occurs.

In this manner, that the terminal device shifts the start moment of the timer in the DRX cycle based on the offset information may include the following two implementations.

In a first implementation, when obtaining the offset information, the terminal device temporarily does not shift the start moment of the timer in the DRX cycle. When receiving indication information sent by the network device for indicating to use the offset information, the terminal device uses the offset information in the start moment of the timer after receiving the indication information.

In a second implementation, when receiving the offset information, the terminal device uses the offset information in the start moment of the timer after receiving the offset information.

In a second manner, the network device configures time information of a cycle for the terminal device, and when receiving the time information of the cycle, the terminal device may adjust a start moment of a DRX cycle based on the time information of the cycle, so that the duration of the DRX cycle is aligned with transmission of the XR data on which jitter occurs.

In this manner, that the terminal device adjusts the start moment of the DRX cycle based on the offset information may include the following two implementations.

In a first implementation, when obtaining the time information of the cycle, the terminal device temporarily does not adjust the start moment of the DRX cycle. After receiving an indication sent by the network device for indicating to use the time information of the cycle, the terminal device uses the offset information in a start moment of a subsequent cycle.

In a second implementation, when receiving the time information of the cycle, the terminal device uses the time information of the cycle in a start moment of a cycle after receiving the time information of the cycle.

The following describes, in detail by using specific embodiments, the technical solutions of this application and how the foregoing technical problems are resolved by using the technical solutions of this application. The following several specific embodiments may be independently implemented, and may also be combined with each other, and the same or similar concepts or processes may not be described repeatedly in some embodiments.

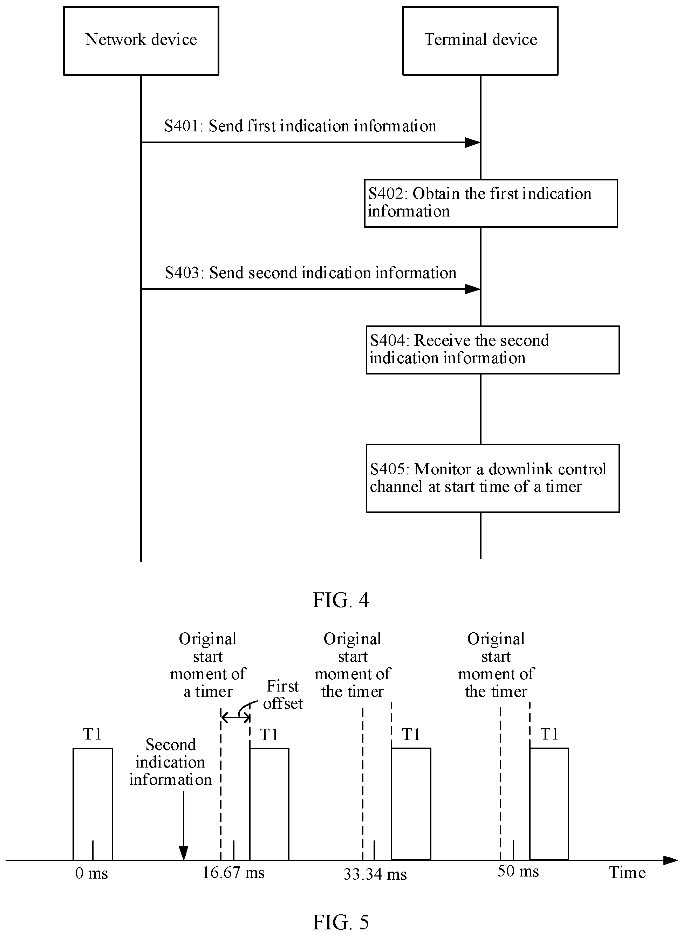

The following describes, with reference to FIG. 4 according to an embodiment of this application, the technical solution in which after an indication indicating to use offset information is received, a start moment of a timer is shifted.

FIG. 4 is a schematic flowchart 1 of a communication method according to an embodiment of this application. As shown in FIG. 4, the method includes the following steps.

S401: A network device sends first indication information to a terminal device.

The first indication information is used for indicating offset information of a timer. The offset information is related to a start moment of one or more timers.

That the offset information is related to the one or more timers may be that the offset information may include or indicate offset-related information of the start moment of the one or more timers. Alternatively, the offset information is related to a start moment or active time of a timer corresponding to one or more cycles. Alternatively, the offset information may include or indicate offset-related information of active time of the one or more timers.

In some embodiments, the first indication information may explicitly indicate the offset information or may implicitly indicate the offset information. For example, the first indication information may include the offset information, or the first indication information may include an index associated with the offset information. One piece of offset information or one offset information interval range may be indexed by using an index. When one offset information interval range is indexed, the offset information may be a smallest value, a largest value, or an average value in the offset information interval range. A manner of indicating the offset information by the network device is not limited in this embodiment of this application.

An example in which the offset information may indicate the offset-related information of the start moment or the active time of the one or more timers is used.

In a possible implementation, the related information indicates to use the offset information in a start moment or active time of one timer or indicates to use the offset information in start moments of N timers. The related information indicates to shift a start moment or active time of one timer or indicates to shift start moments or active time of N timers. For example, the related information may indicate preset information. When a value of the information is 1, it indicates to use the offset information in a start moment of one timer or shift a start moment of one timer, when a value of the information is 2, it indicates to use the offset information in start moments of two timers or shift start moments of two timers, and when a value of the information is N, it indicates to use the offset information in start moments of N timers or shift start moments of N timers. In other words, the offset information may indicate a quantity of timers to be shifted or in which the offset information is to be used, and is static information. The static information means that the information is not used immediately after being delivered, and may be activated or used through an indication of other information. For example, when second indication information is received, the related information is used or activated, or active time of a timer is shifted by using the related information.

In a possible implementation, the offset information may indicate, in a bit mapping manner, to use the offset information in start moments or active time of a plurality of timers or shift start moments or active time of a plurality of timers. For example, the offset information may indicate N bits of information, and each bit of information corresponds to one timer. When a value of bit information is 1, it may indicate that a corresponding timer may be shifted by using the offset information, or when a value of bit information is 0, it may indicate that a corresponding timer may be shifted by using the offset information. This is not limited in this embodiment of this application.

In some embodiments, the offset information may be used for indicating a first offset of a start moment or active time of one or more DRX timers. For example, the offset information may include a first offset of a start moment of a timer. The first offset may be offset duration for shifting the start moment of the timer. A time unit of the offset duration may be a time unit in any granularity, for example, five milliseconds (milli second, ms), five subframes, five slots, or five symbols. A time unit granularity of the first offset is not limited in this embodiment of this application. It should be understood that each DRX cycle mentioned in this embodiment of this application is a DRX cycle corresponding to a cycle in which jitter occurs on XR data. Details are not described subsequently. It should be understood that the first offset may alternatively be indicated by using one or more pieces of bit information. For example, 00 represents one subframe, and 01 represents two subframes.

In some embodiments, the offset information may further indicate to shift a start moment or active time of a timer backward or shift a start moment or active time of a timer forward, that is, a shifting direction of the start moment or the active time of the timer.

In a possible implementation, a positive symbol may be added before the first offset included in the offset information to indicate to shift the start moment or the active time of the timer forward or backward. For example, when the first offset is 5 ms, +5 ms may indicate to shift the start moment of the timer backward by 5 ms, and -5 ms indicates to shift the start moment of the timer forward by 5 ms. Alternatively, +5 ms may indicate to shift the start moment of the timer forward by 5 ms, and -5 ms indicates to shift the start moment of the timer backward by 5 ms. This is not limited in this embodiment of this application. The positive sign and the negative sign may be indicated by using 1-bit information. For example, 00 indicates the positive sign, and 01 indicates the negative sign.

In a possible implementation, description information of the first offset may be indicated in the offset information, to indicate to shift the start moment of the timer forward or backward. For example, the offset information may indicate 1-bit information. When a value of the information is 0, it indicates to shift the start moment of the timer backward, and when a value of the information is 1, it indicates to shift the start moment of the timer forward. Alternatively, when a value of the information is 0, it indicates to shift the start moment of the timer forward, and when a value of the information is 1, it indicates to shift the start moment of the timer backward. This is not limited in this embodiment of this application.

In some embodiments, the offset information may further indicate a quantity of timers in which the first offset is to be used, for example, three timers, or duration information in which the first offset is to be used, for example, the first offset is used in a corresponding timer within 50 ms.

The network device may predict arrival time of XR data. If the network device predicts that jitter occurs on the arrival time of the XR data, that is, the XR data is not transmitted based on a preset cycle, but arrives in advance or later, the network device may send the first indication information to the terminal device.

For example, the network device may determine, based on a historical transmission status of the XR data or through prediction by using an AI model, that the jitter occurs on the arrival time of the XR data, and the offset information when jitter occurs. When obtaining the offset information, the network device may send the first indication information to the terminal device.

In an optional embodiment, the offset information may alternatively be sent by a core network device to the network device. When receiving the offset information sent by the core network device, the network device may send the first indication information to the terminal device.

In some embodiments, when the network device configures DRX for the terminal device, the first indication information may be carried in DRX configuration information and sent to the terminal device. For example, the network device sends, by using a radio resource control (radio resource control, RRC) message, a media access control (Media Access Control, MAC) control element (Control Element, CE), or a downlink control information (downlink control information, DCI) message, the DRX configuration information that carries the first indication information to the terminal device.

Optionally, the first indication information may alternatively be sent to the terminal device by using a new message. For example, the terminal device may define a new RRC message, MAC CE, or DC message for sending the first indication information to the terminal device. This is not limited in this embodiment of this application.

It should be understood that start time of a timer after a start moment may also be referred to as active time of the timer.

S402: The terminal device obtains the first indication information.

That the terminal device obtains the first indication information may be that the terminal device receives the first indication information sent by the network device. Alternatively, the first indication information may be predefined in the terminal device, or may be information agreed on by a protocol, and is predefined in the protocol. When obtaining the first indication information, the terminal device may determine the offset information carried in the first indication information, or determine the index associated with the offset information carried in the first indication information.

When the first indication information carries the index associated with the offset information, the terminal device may obtain the corresponding offset information based on the index associated with the offset information. It should be understood that, if the first indication information carries the index associated with the offset information, the network device may preconfigure a mapping relationship between the index and the offset information for the terminal device, and the terminal device may obtain the offset information based on the index and the mapping relationship.

It should be understood that, for S402, S401 may be an optional step.

S403: The network device sends second indication information to the terminal device.

The second indication information may be used for indicating to use the offset information in the start moment or the active time of the timer or used for indicating to shift the active time of the timer. Further, the second indication information is used for indicating the terminal device to use the offset information in a start moment of a timer corresponding to a cycle, or used for indicating to shift a timer corresponding to a cycle or shift active time of a timer. When obtaining the second indication information, the terminal device may shift the timer or the active time by using the first indication information.

The second indication information may be enable information or bit information to indicate to use the offset information or indicate to perform shifting. For example, when the second indication information is the enable information, if the second indication information is enable, it may indicate the terminal device to use the offset information or to shift the timer. When the second indication information is disable, it may indicate the terminal device not to use the offset information or not to shift the timer.

When the second indication information is the bit information, when the second indication information is 0, it may indicate the terminal device to use the offset information or to shift the timer. When the second indication information is 1, it may indicate the terminal device not to use the offset information or not to shift the timer. Alternatively, when the second indication information is 1, it may indicate the terminal device to use the offset information or to shift the timer. When the second indication information is 0, it may indicate the terminal device not to use the offset information or not to shift the timer. This is not limited in this embodiment of this application.

In some embodiments, the second indication information may be used for indicating to use the offset information in a start moment of a next timer or start moments of next N timers, or used for indicating to shift one or more timers. Further, the second indication information may be used for indicating to use the offset information in the start moment of the next timer or the start moments of the next N timers, or used for indicating to shift the next timer or a plurality of continuous timers. The second indication information is used for indicating the terminal device to use the offset information in a start moment of a timer corresponding to one or more cycles, or used for indicating to shift a timer corresponding to one or more cycles.

An example in which the second indication information is used for indicating to use the offset information in the start moment of the next timer or the start moments of the next N timers is used.

In a possible implementation, the second indication information may indicate preset information. When a value of the information is 1, it indicates to use the offset information in a start moment of a next timer, when a value of the information is 2, it indicates to use the offset information in start moments of next two timers, and when a value of the information is N, it indicates to use the offset information in start moments of next N timers.

In a possible implementation, the second indication information may indicate, in a bit mapping manner, to use the offset information in start moments of a plurality of timers. For example, the second indication information may indicate N bits of information, and each bit of information corresponds to one timer. When a value of each bit of information is 1, it may indicate to use the offset information in a start moment of a corresponding timer, or when a value of each bit of information is 0, it may indicate to use the offset information in a start moment of a corresponding timer.

Optionally, the second indication information may alternatively indicate to shift the start moment of the timer backward or shift the start moment of the timer forward. A manner in which the second indication information indicates to shift the start moment of the timer backward or shift the start moment of the timer forward is similar to an indication manner of the first indication information. Details are not described herein again.

It should be understood that content indicated in the second indication information may be determined based on content indicated in the first indication information. For example, if the offset information indicated by the first indication information includes a first offset, a timer in which the first offset is to be used, and a shifting direction of the timer, the second indication information may indicate only start of using the offset information (that is, indicate only enable information). If the offset information indicated by the first indication information includes a first offset and a timer in which the first offset is to be used, the second indication information may indicate start of using the offset information and a shifting direction of the timer. If the offset information indicated by the first indication information includes only a first offset, the second indication information may indicate start of using the offset information, a timer in which the first offset is to be used, and a shifting direction of the timer. In other words, offset-related information of a timer is jointly indicated by using the first indication information and the second indication information.

The network device may predict transmission of XR data based on a historical transmission status of the XR data or by using an AI model before the transmission of the XR data starts or before each cycle starts. When predicting that data jitter occurs on the XR data in one or more cycles, the network device may send the second indication information to the terminal device before a start moment of a timer in a 1^{st} cycle in which data jitter occurs. For example, when the network device may predict that jitter occurs on the XR data in a plurality of cycles, for example, the XR data arrives later in a 3^{rd} cycle and a 4^{th} cycle, the network device may send the second indication information to the terminal device before a start moment of a timer in the 3^{rd} cycle, to indicate to shift timers corresponding to the 3^{rd} cycle and the 4^{th} cycle. Alternatively, when the network device predicts that jitter occurs on the XR data only in one cycle, the network device may send the second indication information to the terminal device before a start moment of a timer in the cycle, to indicate to shift the timer corresponding the cycle.

It should be understood that a resource and a position for the network device to send the second indication information may be preconfigured, and the resource and the position for sending the second indication information are sent to the terminal device, for example, the resource and the position are carried in the first indication information or the DRX configuration information and sent to the terminal device. The network device does not send the second indication information when not predicting that jitter occurs on the XR data.

In some embodiments, the second indication information may be sent to the terminal device by using a DCI message, or may be sent to the terminal device by using a message of another type.

S404: The terminal device receives the second indication information sent by the network device.

The terminal device receives the second indication information sent by the network device, and may use the offset information in subsequent one or more timers to shift a start moment of a timer, or shift subsequent one or more timers. Alternatively, the terminal device shifts active time of a timer.

For example, as shown in FIG. 5, the terminal device may receive, at a preset position (before a T1 timer is started), the second indication information sent by the network device. If the terminal device receives the second indication information, the terminal device may use the offset information in a subsequent timer or shift subsequent one or more timers, or shift active time of a timer.

It should be understood that the terminal device may receive the resource and the position for the second indication information that are configured by the network device. The terminal device monitors the second indication information based on the resource and the position for the second indication information. If the terminal device monitors the second indication information based on the resource and the position, the terminal device shifts a timer based on the second indication information.

The terminal device may monitor a downlink channel based on a resource and a position corresponding to each cycle, to receive whether the network device delivers the second indication information. In other words, the terminal device cyclically monitors the downlink channel. If the terminal device receives the second indication information when monitoring the downlink channel, the terminal device uses the first offset in a subsequent timer to shift a start moment of a timer. If the terminal device does not receive the second indication information when monitoring the downlink channel, the terminal device starts a timer in an existing manner.

S405: The terminal device monitors a downlink control channel at start time of a timer.

In this embodiment of this application, the start time of the timer may be duration of the timer.

An example in which the second indication information indicates to use the offset information or perform shifting, and the remaining information is indicated by the first indication information is used. When receiving the second indication information, the terminal device may shift a start moment of a timer based on content indicated by the first indication information in subsequent timers. For example, the remaining information may include the following information indicated by the first indication information.

For example, if the offset information indicates at least one of the following information: the first offset, shifting a start moment of a timer backward, and shifting three timers, when receiving the second indication information, the terminal device may use, based on the first offset, the first offset in consecutive three timers after a moment at which the second indication information is received, and shift start moments of the timers backward. Alternatively, if the first indication information indicates the first offset, to shift a start moment of a timer backward, and three bits of information, where a value of each bit of information is 1 (which indicates to use the first offset in three timers), when receiving the second indication information, the terminal device may use, based on the first offset, the first offset in consecutive three timers after a moment at which the second indication information is received, and shift start moments of the timers backward.

Alternatively, if the offset information indicates the first offset, to shift a start moment of a timer backward, and three bits of information, where both values of 1^{st} bit of information and 2^{nd} bit of information are 1 (which indicates to use the first offset in a 1st timer or a 2^{nd} timer), and a value of 3^{rd} bit of information is 0 (which indicates not to use the first offset in a 3^{rd} timer), when receiving the second indication information, the terminal device may use, based on the first offset, the first offset in the 1^{st} timer and the 2^{nd} timer after a moment at which the second indication information is received, and shift start moments of the timers backward.

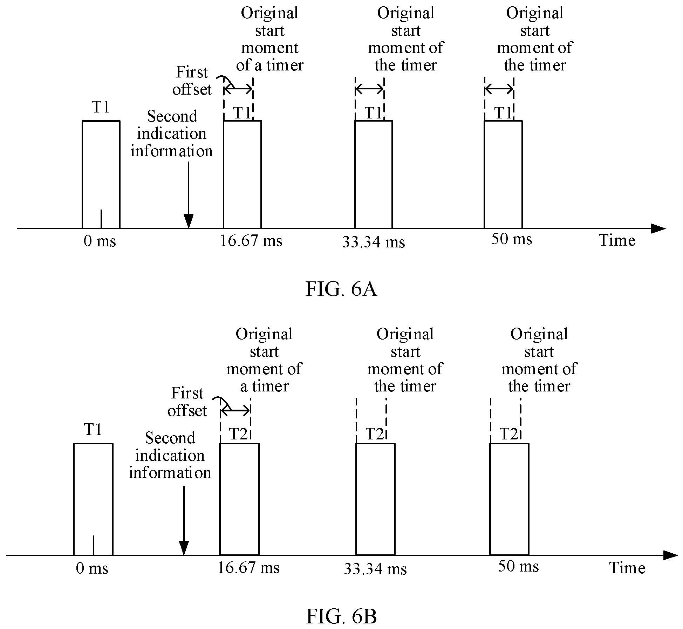

For example, as shown in FIG. 5, if the offset information indicates to shift a start moment of a timer backward, the first offset is used in consecutive three timers after the second indication information is received, and start moments of the timers are shifted backward. Alternatively, as shown in FIG. 6A, if the offset information indicates to shift a start moment of a timer forward, the first offset is used in consecutive three timers after the second indication information is received, and start moments of the timers are shifted forward.

When receiving the second indication information, the terminal device may use the first offset in a timer and shift a start moment of the timer. When the terminal device uses the first offset in a timer, in the related technology, drx-SlotOffset (a first preset offset) is defined as delay time of the start moment of the timer. Therefore, when the terminal device uses the first offset in the timer, the following two possible implementations may be included.

In a first possible implementation, when using the first offset, the terminal device does not need to use drx-SlotOffset, that is, the terminal device needs to use only the first offset.

In a second possible implementation, when using the first offset, the terminal device needs to use drx-SlotOffset, that is, the terminal device needs to use the first offset and drx-SlotOffset in a start moment of a timer.

Because the start moment of the timer may include a scenario in which the start moment of the timer is shifted backward or may include a scenario in which the start moment of the timer is shifted forward, the following describes a manner of determining the start moment of the timer by using the first offset in different scenarios.

In a first possible implementation, the start moment of the timer is shifted backward.

When obtaining the first offset, if the terminal device uses only the first offset, the start moment of the timer is a corresponding moment obtained by shifting a start moment of a subframe of a DRX cycle backward by the first offset. In other words, the timer is started after the first offset after the subframe starts. For example, if the first offset is 1 ms, the timer is started after 1 ms after the subframe starts. The subframe of the DRX cycle may be an initial subframe at which the DRX cycle starts, or may be a subframe determined by the terminal device based on a parameter of the DRX cycle.

In a second possible implementation, the start moment of the timer is shifted backward.

When obtaining the first offset, if the terminal device uses the first offset and drx-SlotOffset, the start moment of the timer is a corresponding moment obtained by shifting a start moment of a subframe of a DRX cycle backward by a first value (the first value=drx-SlotOffset+the first offset). In other words, the timer is started after the first value (the first offset+drx-SlotOffset) after the subframe starts. For example, if the first offset is 1 ms, and drx-SlotOffset is 0.5 ms, the timer is started after 1.5 ms after the subframe starts.

Optionally, in the second possible implementation, drx-SlotOffset defines backward delay time of the start moment of the timer, that is, drx-SlotOffset defines both a shifting manner and an offset (the delay time). When using drx-SlotOffset, the terminal device may alternatively use only the offset defined in drx-SlotOffset. Correspondingly, drx-SlotOffset is used. When the start moment of the timer is shifted backward, the start moment of the timer may also be that the timer is started after a second value (the second value=the first offset-drx-SlotOffset) after the subframe starts.

In a third possible implementation, the start moment of the timer is shifted forward.

When obtaining the first offset, if the terminal device uses only the first offset, the start moment of the timer is a corresponding moment obtained by shifting a start moment of a subframe of a DRX cycle forward by the first offset. In other words, the timer is started before the first offset before the subframe starts. For example, if the first offset is 1 ms, the timer is started before 1 ms before the subframe starts.

In a fourth possible implementation, the start moment of the timer is shifted forward.

When obtaining the first offset, if the terminal device uses the first offset and drx-SlotOffset, the start moment of the timer is a corresponding moment obtained by shifting a start moment of a subframe of a DRX cycle forward by a third value (the third value=the first offset-drx-SlotOffset). In other words, the timer is started before the third value (the first offset-drx-SlotOffset) before the subframe starts. For example, if the first offset is 1 ms, and drx-SlotOffset is 0.5 ms, the timer is started before 0.5 ms before the subframe starts.

Optionally, in the fourth possible implementation, drx-SlotOffset defines backward shifting of the start moment of the timer, that is, drx-SlotOffset defines both a shifting manner and an offset. When using drx-SlotOffset, the terminal device may alternatively use only the offset defined in drx-SlotOffset. Correspondingly, drx-SlotOffset is used. When the start moment of the timer is shifted forward, the start moment of the timer may also be that the timer is started after a fourth value (the fourth value=the first offset+drx-SlotOffset) after the subframe starts.

In some embodiments, whether to use drx-SlotOffset when the first offset is used in the start moment of the timer may be a default rule, or may be indicated by using indication information. For example, the first indication information carries indication information indicating whether to use drx-SlotOffset, the second indication information carries indication information indicating whether to use drx-SlotOffset, or new indication information is defined to indicate whether to use drx-SlotOffset. This is not limited in this embodiment of this application.

After determining a timer in which the first offset is to be used and a shifting direction of the timer and determining, based on the first offset, to shift a start moment of the timer, the terminal starts the timer when a shifted start moment of the timer arrives, and a DRX cycle enters an active period. The terminal device monitors a PDCCH from start time of the timer and receives XR data.

It should be understood that in this embodiment of this application, S401 and S403 are actions performed by the network device, and S402, S404, and S405 are actions performed by the terminal device. For the entire procedure, S401 is an optional step, that is, when receiving the second indication information from the network device, the terminal device may shift the start moment of the timer.

In some embodiments, the network device indicates, by sending the first indication information and/or the second indication information, to shift start moments of timers (T1 timers) in some DRX cycles in which jitter occurs on XR data, to match a scenario in which jitter occurs on the XR data.

In some optional embodiments, the network device may configure a new timer (a T2 timer) to replace a corresponding T1 timer when jitter occurs on the XR data. In other words, in a corresponding DRX cycle in which jitter occurs on the XR data, the T2 timer is used for timing duration. Duration of the T2 timer may be the same as duration of the T1 timer or may be different from the duration of the T1 timer. In other words, the duration of the T2 timer may be configured based on an actual requirement. This is not limited in this embodiment of this application. For example, the T1 timer and the T2 timer are configured in a DRX configuration. When the first indication information or the second indication information is not obtained, the T1 timer is used. When the first indication information or the second indication information is obtained, the T2 timer is used. In a case, the first indication information or the second indication information may further indicate related information of a timer, used for indicating information about subsequently used one or more timers.

In some embodiments, the network device may indicate, by using the first indication information or the second indication information or by defining new indication information, the terminal device to use the T2 timer. For example, as shown in FIG. 6B, the network device indicates, by using the second indication information, the terminal device to use the T2 timer. When receiving the second indication information, the terminal device may replace subsequent three T1 timers with T2 timers.

It should be understood that the network device may include the T2 timer in the DRX configuration and send the DRX configuration to the terminal device, the network device may include the T2 timer in the first indication information or the second indication information and send the first indication information or the second indication information to the terminal device, or the network device may define a new RRC message, DCI message, MAC CE, or the like and indicate the T2 timer to the terminal device.

According to the communication method provided in this embodiment of this application, the terminal device receives offset information sent by the network device and adjusts a start moment of one or more timers in a DRX cycle based on the offset information. When jitter occurs on XR data, delivering time of the XR data may be aligned with start time of a timer, so that the terminal device can receive the XR data at the start time of the timer, to reduce a probability that the delivering time of the XR data does not match the start time of the timer due to jitter occurring on the XR data, and consequently the terminal device cannot receive the XR data at the start time of the timer, resulting in a waste of power consumption of the terminal device.

Based on the foregoing embodiments, when the terminal device starts a timer at a shifted start moment of the timer, a start condition of the timer further needs to be met.

The following separately describes a start condition for shifting a start moment of a timer backward and a start condition for shifting the start moment of the timer forward.

The start condition for shifting the start moment of the timer backward is first described.

In some embodiments, a timer have different start conditions based on configuration information of different DRX cycles.

The configuration information of the DRX cycle may include one or more of the following parameters:
a long discontinuous reception cycle (DRX-LongCycle), for example, the long cycle may be an integer cycle like 50 ms, 60 ms, or 70 ms, or may be a non-integer cycle like 55.5 ms, 65.5 ms, or 75.5 ms;
a short discontinuous reception cycle (DRX-ShortCycle), for example, the short cycle may be an integer cycle like 1 ms, 2 ms, or 3 ms, or may be a non-integer cycle like 1.5 ms, 2.5 ms, or 3.5 ms; and
DRX-On-DurationTimer (drx-on duration timer), DRX-InactivityTimer (drx-inactivity timer), drx-Retransmission Timer DL (drx-retransmission timer DL), drx-Retransmission Timer UL (drx-harq-rtt-timer UL), drx-Retransmission Timer SL (drx-retransmission timer SL), DRX-HARQ-RTT-Timer DL (drx-harq-rtt-timer DL), DRX-HARQ-RTT-Timer UL (drx-harq-rtt-timer UL), DRX-HARQ-Retransmision Timer SL (drx-harq-rtt-timer SL), drx-StartOffset, drx-SlotOffset, and the like.

In some optional embodiments, the timer may alternatively be any one of the DRX-Inactivity Timer, the drx-Retransmission Timer DL, the drx-Retransmission Timer UL, the drx-Retransmission Timer SL, the DRX-HARQ-RTT-Timer DL, the DRX-HARQ-RTT-Timer UL, and the DRX-HARQ-Retransmision Timer SL.

The following separately describes start conditions under configuration information of different DRX cycles.

In a possible implementation, if a DRX cycle is a short cycle, and the short cycle is an integer cycle, and if the following formula is satisfied: 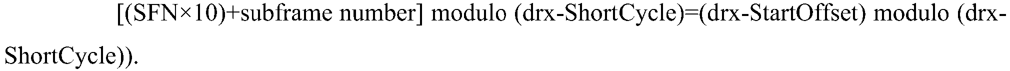 [(SFN×10)+subframe number] modulo (drx-ShortCycle)=(drx-StartOffset) modulo (drx-ShortCycle)).

SFN is a system frame number, subframe number is a subframe number, modulo is a modulo operation, drx-ShortCycle is a short DRX cycle (which may also be referred to as a short DRX cycle configuration), and drx-StartOffset is a start position of a DRX cycle (a start subframe of the DRX cycle).

If only the first offset is used, when obtaining the first indication information or the second indication information, the terminal device starts a timer after the first offset after a subframe of a DRX cycle starts. If the first offset and drx-SlotOffset are used, when obtaining the first indication information or the second indication information, the terminal device starts a timer after a first value (the first offset+drx-SlotOffset) after the subframe of the DRX cycle starts. The subframe of the DRX cycle may be an initial subframe at which the DRX cycle starts, or may be a subframe determined based on the foregoing formula (for example, drx-StartOffset or a cycle configuration). This is not limited in this embodiment of this application.

In a possible implementation, if a DRX cycle is a short cycle, and the short cycle is a non-integer cycle, and if the following formula is satisfied: 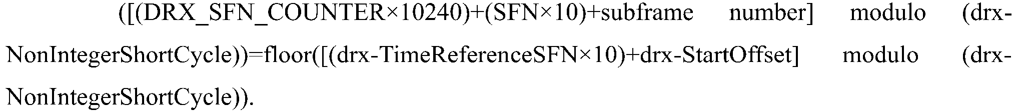 ([(DRX_SFN_COUNTER×10240)+(SFN×10)+subframe number] modulo (drx-NonIntegerShortCycle))=floor([(drx-TimeReferenceSFN×10)+drx-StartOffset] modulo (drx-NonIntegerShortCycle)).

DRX_SFN_COUNTER is a quantity of extended bits of an SFN, floor is a rounding down operation, drx-NonIntegerShortCycle is a non-integer short cycle, and drx-TimeReferenceSFN is system frame reference time.

If only the first offset is used, when obtaining the first indication information or the second indication information, the terminal device starts a timer after the first offset after a subframe of a DRX cycle starts. If the first offset and drx-SlotOffset are used, when obtaining the first indication information or the second indication information, the terminal device starts a timer after a first value (the first offset+drx-SlotOffset) after the subframe of the DRX cycle starts.

In a possible implementation, if a DRX cycle is a long cycle, and the long cycle is an integer cycle, and if the following formula is satisfied:
$\left[\left(SFN\times 10\right)+subframe number\right] modulo \left(drx-LongCycle\right) = drx - StartOffset .$

drx-LongCycle is a long DRX cycle (which may also be referred to as a long DRX cycle configuration).

If only the first offset is used, when obtaining the first indication information or the second indication information, the terminal device starts a timer after the first offset after a subframe of a DRX cycle starts. If the first offset and drx-SlotOffset are used, when obtaining the first indication information or the second indication information, the terminal device starts a timer after a first value (the first offset+drx-SlotOffset) after the subframe of the DRX cycle starts.

In a possible implementation, if a DRX cycle is a long cycle, and the long cycle is a non-integer cycle, and if the following formula is satisfied: 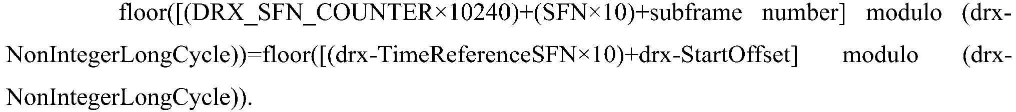 floor([(DRX_SFN_COUNTER×10240)+(SFN×10)+subframe number] modulo (drx-NonIntegerLongCycle))=floor([(drx-TimeReferenceSFN×10)+drx-StartOffset] modulo (drx-NonIntegerLongCycle)).

drx-NonIntegerLongCycle is a non-integer long cycle.

If only the first offset is used, when obtaining the first indication information or the second indication information, the terminal device starts a timer after the first offset after a subframe of a DRX cycle starts. If the first offset and drx-SlotOffset are used, when obtaining the first indication information or the second indication information, the terminal device starts a timer after a first value (the first offset+drx-SlotOffset) after the subframe of the DRX cycle starts.

The following describes the start condition for shifting the start moment of the timer forward.

In a possible implementation, if a DRX cycle is a short cycle, and the short cycle is an integer cycle, and if the following formula is satisfied, the terminal device starts a timer in the DRX cycle: 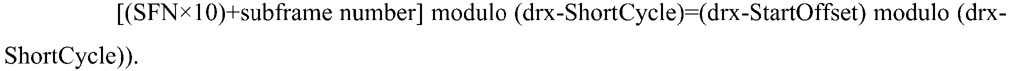 [(SFN×10)+subframe number] modulo (drx-ShortCycle)=(drx-StartOffset) modulo (drx-ShortCycle)).

SFN is a system frame number, subframe number is a subframe number, modulo is a modulo operation, drx-ShortCycle is a short DRX cycle (which may also be referred to as a short DRX cycle configuration), and drx-StartOffset is a start position of a DRX cycle (a start subframe of the DRX cycle).

If only the first offset is used, when obtaining the first indication information or the second indication information, the terminal device starts a timer before the first offset before a subframe of a DRX cycle starts. If the first offset and drx-SlotOffset are used, when obtaining the first indication information or the second indication information, the terminal device starts a timer before a third value (the first offset-drx-SlotOffset) before the subframe of the DRX cycle starts.

In a possible implementation, if a DRX cycle is a short cycle, and the short cycle is a non-integer cycle, and if the following formula is satisfied: 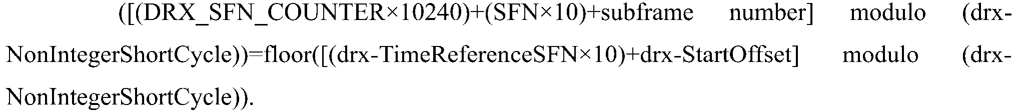 ([(DRX_SFN_COUNTER×10240)+(SFN×10)+subframe number] modulo (drx-NonIntegerShortCycle))=floor([(drx-TimeReferenceSFN×10)+drx-StartOffset] modulo (drx-NonIntegerShortCycle)).

DRX_SFN_COUNTER is a quantity of extended bits of an SFN, floor is a rounding down operation, drx-NonIntegerShortCycle is a non-integer short cycle, and drx-TimeReferenceSFN is system frame reference time.

If only the first offset is used, when obtaining the first indication information or the second indication information, the terminal device starts a timer before the first offset before a subframe of a DRX cycle starts. If the first offset and drx-SlotOffset are used, when obtaining the first indication information or the second indication information, the terminal device starts a timer before a third value (the first offset-drx-SlotOffset) before the subframe of the DRX cycle starts.

In a possible implementation, if a DRX cycle is a long cycle, and the long cycle is an integer cycle, and if the following formula is satisfied:
$\left[\left(SFN\times 10\right)+subframe number\right] modulo \left(drx-LongCycle\right) = drx - StartOffset .$

drx-LongCycle is a long DRX cycle (which may also be referred to as a long DRX cycle configuration).

If only the first offset is used, when obtaining the first indication information or the second indication information, the terminal device starts a timer before the first offset before a subframe of a DRX cycle starts. If the first offset and drx-SlotOffset are used, when obtaining the first indication information or the second indication information, the terminal device starts a timer before a third value (the first offset-drx-SlotOffset) before the subframe of the DRX cycle starts.

In a possible implementation, if a DRX cycle is a long cycle, and the long cycle is a non-integer cycle, and if the following formula is satisfied: 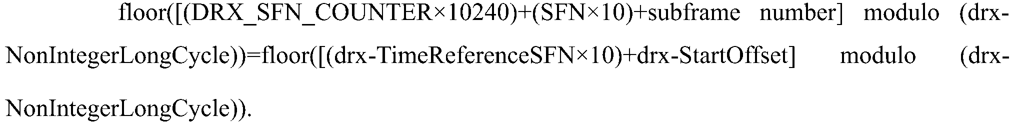 floor([(DRX_SFN_COUNTER×10240)+(SFN×10)+subframe number] modulo (drx-NonIntegerLongCycle))=floor([(drx-TimeReferenceSFN×10)+drx-StartOffset] modulo (drx- NonIntegerLongCycle)).

drx-NonIntegerLongCycle is a non-integer long cycle.

If only the first offset is used, when obtaining the first indication information or the second indication information, the terminal device starts a timer before the first offset before a subframe of a DRX cycle starts. If the first offset and drx-SlotOffset are used, when obtaining the first indication information or the second indication information, the terminal device starts a timer before a third value (the first offset-drx-SlotOffset) before the subframe of the DRX cycle starts.

In the foregoing, the network device configures the offset information for the terminal device by using the first indication information, and indicates, by using the second indication information, the terminal device to use the offset information to shift the start moment of the timer, so that the start moment of the timer is aligned with transmission of the XR data. In other words, the offset information is preconfigured information. If the terminal device does not receive the second indication information sent by the network device, the terminal device does not use the offset information, and a solution in which the timer is started in a conventional manner is described.

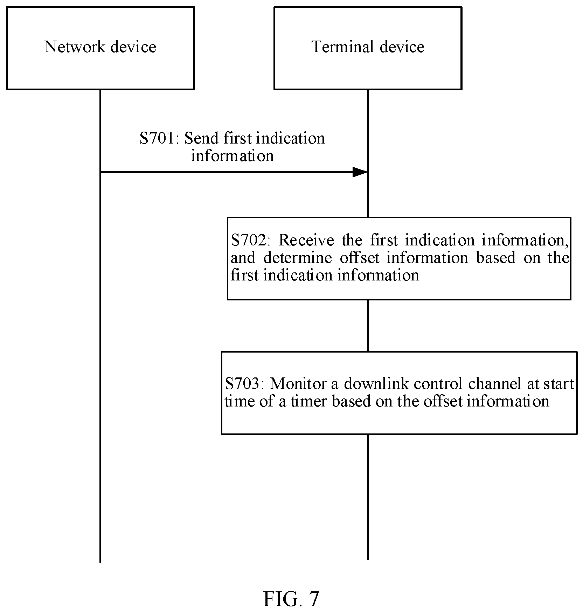

The following describes, with reference to FIG. 7, a technical solution in which when the terminal device receives the offset information, the offset information may be directly used in a subsequent timer.

FIG. 7 is a schematic flowchart 2 of a communication method according to an embodiment of this application. As shown in FIG. 7, the method includes the following steps.

S701: A network device sends first indication information to a terminal device.

The first indication information is used for indicating offset information of a timer.

The first indication information is further used for indicating to use the offset information in a start moment or active time of the timer or used for indicating to shift the timer. Further, the first indication information is used for indicating the terminal device to use the offset information in a start moment or active time of a timer corresponding to a cycle, or used for indicating to shift a timer corresponding to a cycle or active time or shift active time of the timer.

The offset information is related to a start moment of one or more timers. That the offset information is related to the one or more timers may be that the offset information may include or indicate offset-related information of the start moment of the one or more timers.

The offset information may be used for indicating offset-related information of a start moment of one timer or may be used for indicating offset-related information of start moments of N timers.

The offset information may alternatively be used for indicating a first offset of a start moment of one or more DRX timers.

The offset information may alternatively be used for indicating to shift a start moment of a timer backward or shift a start moment of a timer forward.

In an implementation, the first indication information directly indicates to use an offset in one or more timers or shift one or more timers, for example, may indicate to use an offset in a next timer or next N timers or shift a next timer or next N timers. An indication manner is similar to the implementation in the embodiment shown in FIG. 4.

An implementation in which the first indication information indicates the offset information and an implementation in which the offset information indicates information such as the first offset and a shifting direction are similar to the implementation in which the first indication information indicates the offset information and the implementation in which the offset information indicates information such as the first offset and the shifting direction in S401 in the embodiment shown in FIG. 4. Details are not described in this embodiment of this application again.

It should be understood that a manner of sending the first indication information by the network device is similar to that in S401 in the embodiment shown in FIG. 4. Details are not described herein again.

S702: The terminal device receives the first indication information sent by the network device and determines the offset information based on the first indication information.

When receiving the first indication information, the terminal device may extract the offset information from the first indication information, and when receiving the first indication information, the terminal device uses the offset information in a next timer or next N timers or shifts a next timer or next N timers. N is an integer greater than 1.

S703: The terminal device monitors a downlink control channel at start time of a timer based on the offset information.

When receiving the first indication information, the terminal device may determine, based on the offset information in the first indication information, a first offset, a timer in which the first offset is to be used, and a shifting direction of a start moment of the timer, and shift the start moment of the timer. A specific implementation thereof is similar to the implementation of S405 in the embodiment shown in FIG. 4. Details are not described herein again.

It should be understood that when shifting the start moment of the timer by using the first offset in the timer, the terminal device also needs to determine whether to use drx-SlotOffset. A specific implementation thereof is similar to the implementation of S405. Details are not described herein again.

The terminal device starts the timer when a shifted start moment of the timer arrives, and a DRX cycle enters an active period. The terminal device monitors a PDCCH from start time of the timer and receives XR data.

In some embodiments, the network device sends the first indication information to indicate to shift start moments of timers (T1 timers) in some DRX cycles in which jitter occurs on XR data, to match a scenario in which jitter occurs on the XR data.

In some optional embodiments, the network device may configure a new timer (a T2 timer) to replace a corresponding T1 timer when jitter occurs on the XR data. In other words, in a corresponding DRX cycle in which jitter occurs on the XR data, the T2 timer is used for timing duration. Duration of the T2 timer may be the same as duration of the T1 timer or may be different from the duration of the T1 timer. In other words, the duration of the T2 timer may be configured based on an actual requirement. This is not limited in this embodiment of this application. For example, the T1 timer and the T2 timer are configured in a DRX configuration. When the first indication information is not obtained, the T1 timer is used. When the first indication information is obtained, the T2 timer is used. In a case, the first indication information may further indicate related information of a timer, used for indicating information about subsequently used one or more timers.

It should be understood that the network device may include the T2 timer in the DRX configuration and send the DRX configuration to the terminal device, the network device may include the T2 timer in the first indication information and send the first indication information to the terminal device, or the network device may define a new RRC message, DCI message, MAC CE, or the like and indicate the T2 timer to the terminal device.

It should be understood that a difference between the embodiment shown in FIG. 4 and the embodiment shown in FIG. 7 lies in as follows.

In the embodiment shown in FIG. 4, the first indication information and the second indication information may be jointly used for indicating the offset information of the start moment of the timer and enable information, and after receiving the second indication information, the terminal device applies the offset information in a subsequent timer.

In the embodiment shown in FIG. 7, the first indication information is used for indicating the offset information of the start moment of the timer and enable information, and after receiving the first indication information, the terminal device applies the offset information in a subsequent timer.

It should be understood that in this embodiment of this application, when a timer is started, a start condition of the timer also needs to be met. For the start condition of the timer, refer to the start condition described in the foregoing embodiments. Details are not described herein again.

In some embodiments, the T2 timer may be configured by the network device and sent to the terminal device, for example, may be carried in the first indication information, or may be carried in second indication information, and sent to the terminal device. Alternatively, the T2 timer may be configured by the terminal device when receiving the first indication information or receiving second indication information. This is not limited in this embodiment of this application.

In the foregoing embodiment, the network device indicate, by using the first indication information or the second indication information, offset duration of a start moment of the T1 timer or the T2 timer. In some embodiments, the network device may alternatively indicate, by using the first indication information or the second indication information, to change duration of the T1 timer, for example, increase the duration of the T1 timer, or reduce the duration of the T1 timer, to better match XR data.

In some embodiments, the network device may alternatively indicate, by configuring new indication information, to change duration of the T1 timer. The indication information indicating to change the duration of the T1 timer is not limited in this embodiment of this application.

It should be understood that in the foregoing embodiments, the first indication information and the second indication information may be messages of a same type and sent to the terminal device by using same signaling, the first indication information and the second indication information may be messages of a same type and sent to the terminal device by using different signaling, the first indication information and the second indication information may be messages of a same type and sent to the terminal device by using different signaling, or the first indication information and the second indication information may be messages of different types and sent to the terminal device by using different signaling. This is not limited in this embodiment of this application.

In the foregoing embodiments, the technical solution in which the start moment of the timer is shifted based on the offset information is described. The following describes a technical solution in which a start moment of a cycle is shifted based on offset information.

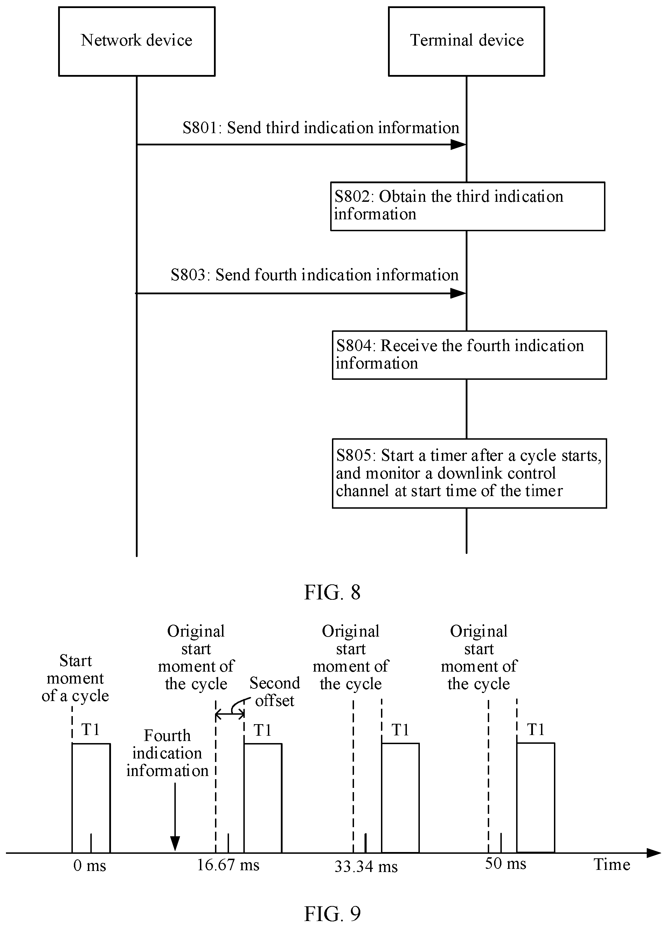

The following describes, with reference to FIG. 8 according to an embodiment of this application, the technical solution in which after an indication indicating to use offset information is received, a start moment of a cycle is shifted.

FIG. 8 is a schematic flowchart 3 of a communication method according to an embodiment of this application. As shown in FIG. 8, the method includes the following steps.

S801: A network device sends third indication information to a terminal device.

In some embodiments, the third indication information is used for indicating time information of one or more cycles.

Optionally, time information of a cycle may be offset information related to start time of the cycle, or time information of a cycle may be start time information of the cycle.

In some embodiments, the third indication information may explicitly indicate the offset information or may implicitly indicate the offset information. Alternatively, the third indication information may explicitly indicate the start time information of the cycle or may implicitly indicate the start time information of the cycle.

For example, the third indication information may include the offset information or the start time information of the cycle, or the third indication information may include an index associated with the offset information or an index associated with the start time information of the cycle. One piece of offset information or one offset information interval range may be indexed by using an index, or start time information of one cycle or a start time information interval range of one cycle may be indexed by using an index. When one offset information interval range or a start time information interval range of one cycle is indexed, the offset information or the start time information may be a smallest value, a largest value, or an average value in the offset information interval range or the start time information interval range of the cycle. A manner of indicating the offset information by the network device is not limited in this embodiment of this application.

The following separately describes cases in which the time information of the cycle is the offset information related to the start time of the cycle, and the time information of the cycle may be the start time information of the cycle.

In a possible implementation, the offset information indicates to use the offset information in start time of one cycle or indicates to use the offset information in start time of N cycles. For example, the offset information may indicate preset information. When a value of the information is 1, it indicates to use the offset information in start time of one cycle, when a value of the information is 2, it indicates to use the offset information in start time of two cycles, and when a value of the information is N, it indicates to use the offset information in start time of N cycles. In other words, the offset information may indicate a quantity of cycles in which the offset information is to be used, and is static information. The static information means that the information is not used immediately after being delivered, and may be activated or used through an indication of other information. For example, when fourth indication information is received, the related information is used or activated.

In a possible implementation, the offset information may indicate, in a bit mapping manner, to use the offset information in start time of a plurality of cycles. For example, the offset information may indicate N bits of information, and each bit of information corresponds to one cycle. When a value of each bit of information is 1, it may indicate to use the offset information in start time of a corresponding cycle, or when a value of each bit of information is 0, it may indicate to use the offset information in start time of a corresponding cycle. This is not limited in this embodiment of this application.

In some embodiments, the start time information of the cycle may also indicate start time information of one cycle or indicate start time information of N cycles. For example, the start time information of the cycle may indicate preset information. When a value of the information is 1, it indicates start time information of one cycle, when a value of the information is 2, it indicates start time information of next two cycles, and when a value of the information is N, it indicates start time information of N cycles.

In a possible implementation, the start time information of the cycle may indicate start time information of a plurality of cycles in a bit mapping manner. For example, the start time information of the cycle may indicate N bits of information, and each bit of information corresponds to one cycle. When a value of each bit of information is 1, it may indicate to use the start time information of the cycle in a corresponding cycle, or when a value of each bit of information is 0, it may indicate to use the start time information of the cycle in a corresponding cycle. This is not limited in this embodiment of this application.

In some embodiments, the offset information may be used for indicating a second offset of start time of one or more DRX cycles. For example, the offset information may include a second offset of start timer of a cycle. The second offset may be offset duration for shifting the start time of the cycle. A time unit of the offset duration may be a time unit in any granularity, for example, five milliseconds (ms), five subframes, five slots, or five symbols. A time unit granularity of the second offset is not limited in this embodiment of this application. It should be understood that the first offset may alternatively be indicated by using one or more pieces of bit information. For example, 00 represents one subframe, and 01 represents two subframes.

In some embodiments, the start time information of the cycle is start moment information of the cycle, used for indicating a start moment of one or more DRX cycles. For example, the start moment information of the cycle may include a target start moment of the cycle, for example, five subframes. The network device may directly indicate, by using the start moment information of the cycle, to start a cycle at a 5^{th} subframe of a radio frame. In other words, the target start moment is an absolute start moment value. Alternatively, the start time information of the cycle is start time of a cycle by using a subframe as a unit, for example, N subframes. The start time information of the cycle may be time information by using a frame, a subframe, a slot, a symbol, or a millisecond as a unit.

In some embodiments, the offset information may further indicate to shift the start time of the cycle backward or shift the start time of the cycle forward. In other words, the offset information may indicate a shifting direction of the start time of the cycle.

In a possible implementation, a positive symbol may be added before the second offset included in the offset information to indicate to shift the start time of the cycle forward or backward. For example, when the second offset is five subframes, +5 subframes may indicate to shift the start time of the cycle backward by five subframes, and -5 subframes may indicate to shift the start time of the cycle forward by five subframes. Alternatively, +5 subframes may indicate to shift the start time of the cycle forward by five subframes, and -5 subframes indicate to shift the start time of the cycle backward by five subframes. This is not limited in this embodiment of this application. The positive sign and the negative sign may be indicated by using 1-bit information. For example, 00 indicates the positive sign, and 01 indicates the negative sign.

In a possible implementation, description information of the second offset may be indicated in the offset information, to indicate to shift the start time of the cycle forward or backward. For example, the offset information may indicate 1-bit information. When a value of the information is 0, it indicates to shift the start time of the cycle backward, and when a value of the information is 1, it indicates to shift the start time of the cycle forward. Alternatively, when a value of the information is 0, it indicates to shift the start time of the cycle forward, and when a value of the information is 1, it indicates to shift the start time of the cycle backward. This is not limited in this embodiment of this application.

In some embodiments, the offset information may further indicate a quantity of cycles in which the second offset is to be used, for example, three cycles, or duration information in which the second offset is to be used, for example, the second offset is used in a corresponding cycle within 50 ms.

The network device may predict arrival time of XR data. If the network device predicts that jitter occurs on the arrival time of the XR data, that is, the XR data is not transmitted based on a preset cycle, but arrives in advance or later, the network device may send the third indication information to the terminal device.

For example, the network device may determine, based on a historical transmission status of the XR data or through prediction by using an AI model, that the jitter occurs on the arrival time of the XR data, and the offset information or the start time information of the cycle when the jitter occurs. When determining the offset information or the start time information of the cycle, the network device may send the third indication information to the terminal device.

In an optional embodiment, the start time information of the cycle or the offset information may alternatively be sent by a core network device to the network device. When receiving the start time information of the cycle or the offset information sent by the core network device, the network device may send the third indication information to the terminal device.

In some embodiments, when the network device configures DRX for the terminal device, the third indication information may be carried in DRX configuration information and sent to the terminal device. For example, the network device sends, by using an RRC message, a MAC CE, a DCI message, or the like, the DRX configuration information that carries the third indication information to the terminal device. Alternatively, the network device may send the third indication information to the terminal device by defining a new RRC message, MAC CE, or DCI message. This is not limited in this embodiment of this application.

S802: The terminal device obtains the third indication information.

That the terminal device obtains the third indication information may be that the terminal device receives the third indication information sent by the network device. Alternatively, the third indication information may be predefined in the terminal device, or may be information agreed on by a protocol, and is predefined in the protocol.

When obtaining the third indication information, the terminal device may extract the offset information or the start time information of the cycle carried in the third indication information, or extract the index associated with the offset information or the index associated with the start time information of the cycle carried in the third indication information.

An example in which the third indication information carries the index associated with the start time information is used. The terminal device may obtain the corresponding start time information based on the index associated with the start time information. It should be understood that, if the third indication information carries the index associated with the start time information, the network device may preconfigure a mapping relationship between the index and the start time information for the terminal device, and the terminal device may obtain the start time information based on the index and the mapping relationship.

It should be understood that, for S802, S801 may be an optional step.

S803: The network device sends fourth indication information to the terminal device.

The fourth indication information may be used for indicating the terminal device to use the time information of the cycle. The time information of the cycle may be offset information related to start time of the cycle, or the time information of the cycle may be start time information of the cycle. Alternatively, the fourth indication information is used for indicating to shift one or more cycles.

In some embodiments, the fourth indication information may be enable information or bit information to indicate to use the offset information or the start time information of the cycle. For example, the fourth indication information is the enable information. When the fourth indication information is enable, it indicates the terminal device to use the offset information or the start time information of the cycle, and when the fourth indication information is disable, it indicates the terminal device not to use the offset information or the start time information of the cycle.

If the fourth indication information is the bit information, when the fourth indication information is 0, it indicates the terminal device to use the offset information or the start time information of the cycle, and when the fourth indication information is 1, it indicates the terminal device not to use the offset information or the start time information of the cycle; or when the fourth indication information is 1, it indicates the terminal device to use the offset information or the start time information of the cycle, and when the fourth indication information is 0, it indicates the terminal device not to use the offset information or the start time information of the cycle. This is not limited in this embodiment of this application.

In some embodiments, the fourth indication information may be used for indicating the terminal device to use the offset information or the start time information of the cycle in a next cycle or next N cycles.

In a possible implementation, the fourth indication information may indicate preset information. When a value of the information is 1, it indicates to use the offset information or the start time information of the cycle in a next cycle, when a value of the information is 2, it indicates to use the offset information or the start time information of the cycle in next two cycles, and when a value of the information is N, it indicates to use the offset information or the start time information of the cycle in next N cycles.

In a possible implementation, the fourth indication information may indicate, in a bit mapping manner, to use the offset information or the start time information of the cycle in a plurality of cycles. For example, the fourth indication information may indicate N bits of information, and each bit of information corresponds to one cycle. When a value of each bit of information is 1, it may indicate to use the offset information or the start time information of the cycle in a corresponding cycle, or when a value of each bit of information is 0, it may indicate to use the offset information or the start time information of the cycle in a corresponding cycle.

Optionally, the time information of the cycle may be the offset information related to the start time of the cycle, and the fourth indication information may also indicate to shift the start time of the cycle backward or shift the start time of the cycle forward. A manner in which the fourth indication information indicates to shift the start time of the cycle backward, or shift the start time of the cycle forward is similar to the indication manner of the third indication information. Details are not described herein again.

Optionally, content indicated in the fourth indication information may be determined based on the content indicated in the third indication information. For example, if the time information of the cycle indicated by the third indication information is the start time information of the cycle, and the start time information of the cycle indicates the start time of the cycle and the cycle in which the start time is to be used, the fourth indication information may indicate only start of using the start time information of the cycle (that is, indicate only the enable information). If the start time information of the cycle indicates only the start time, the fourth indication information may indicate start of using the start time and the cycle in which the start time is to be used.

Optionally, if the third indication information indicates that the time information of the cycle is the offset information of the start time of the cycle, and the offset information indicates the second offset, the cycle in which the second offset is to be used, and a shifting direction of the cycle, the fourth indication information may indicate only start of using the second offset (that is, indicate only the enable information). If the third indication information indicates the second offset and the cycle in which the second offset is to be used, the fourth indication information may indicate start of using the second offset and the shifting direction of the cycle. If the third indication information indicates only the second offset, the fourth indication information may indicate start of using the second offset, the cycle in which the second offset is to be used, and the shifting direction of the cycle. In other words, related information of the start time of the cycle is jointly indicated by using the third indication information and the fourth indication information.

It should be understood that when the third indication information indicates the start time information of the cycle, the shifting direction of the cycle does not need to be indicated, and correspondingly, the fourth indication information does not need to indicate the shifting direction of the cycle.

When determining that data jitter occurs on XR data in one or more cycles, the network device may send the fourth indication information to the terminal device before start time of a 1^{st} cycle in which data jitter occurs. For example, when determining that the XR data arrives later in a 3^{rd} cycle and a 4^{th} cycle, the network device may send the fourth indication information to the terminal device before start time of the 3^{rd} cycle, to indicate to shift the 3^{rd} cycle and the 4^{th} cycle. It should be understood that a manner of determining, by the network device, that data jitter occurs on the XR data in one or more cycles is similar to the manner shown in FIG. 4. Details are not described herein again.

It should be understood that a resource and a position for the network device to send the fourth indication information may be preconfigured, and the resource and the position for sending the fourth indication information are sent to the terminal device, for example, the resource and the position are carried in the third indication information or DRX configuration information and sent to the terminal device. The network device does not send the fourth indication information when not predicting that jitter occurs on the XR data.

In some embodiments, the fourth indication information may be sent to the terminal device by using a DCI message, or may be sent to the terminal device by using a message of another type.

S804: The terminal device receives the fourth indication information sent by the network device.

When receiving the fourth indication information sent by the network device, the terminal device may use the offset information or the start time information of the cycle in subsequent one or more cycles or shift one or more cycles.

It should be understood that the terminal device may receive a resource and a position for the fourth indication information that are configured by the network device. The terminal device monitors the fourth indication information based on the resource and the position for the fourth indication information. If the terminal device monitors the fourth indication information based on the resource and the position, the terminal device shifts a cycle based on the fourth indication information.

The terminal device may monitor a downlink channel based on a resource and a position corresponding to each cycle, to receive whether the network device delivers the fourth indication information. In other words, the terminal device cyclically monitors the downlink channel. If the terminal device receives the fourth indication information when monitoring the downlink channel, the terminal device uses the offset information in a subsequent cycle to shift start time of the cycle, or uses the start time information of the cycle in a subsequent cycle to adjust start time of the cycle. If the terminal device does not receive the fourth indication information when monitoring the downlink channel, the terminal device determines the start time of the cycle in an existing manner.

S805: The terminal device starts a timer after the cycle starts, and monitors a downlink control channel at start time of the timer.

An example in which the fourth indication information indicates to use the offset information or the start time information of the cycle, and the remaining information is indicated by the third indication information is used. When receiving the fourth indication information, the terminal device may adjust start time of a cycle of a timer in subsequent cycles based on the offset information or the start time information of the cycle indicated by the third indication information.

For example, if the offset information indicated by the third indication information includes the second offset, shifting the start time of the cycle backward, and shifting three cycles, when receiving the fourth indication information, the terminal device may use, based on the second offset, the second offset in consecutive three cycles after a moment at which the fourth indication information is received, and shift start time of the cycles backward. Alternatively, if the fourth indication information indicates the second offset, to shift the start time of the cycle backward, and three bits of information, where a value of each bit of information is 1 (which indicates to use the second offset in consecutive three cycles), when receiving the fourth indication information, the terminal device may use, based on the second offset, the second offset in consecutive three cycles after a moment at which the fourth indication information is received, and shift start time of the cycles backward.

Alternatively, if the offset information indicates the second offset, to shift the start time of the cycle backward, and three bits of information, where both values of 1^{st} bit of information and 2^{nd} bit of information are 1 (which indicates to use the second offset in a 1^{st} cycle or a 2^{nd} cycle), and a value of 3^{rd} bit of information is 0 (which indicates not to use the second offset in a 3^{rd} cycle), when receiving the fourth indication information, the terminal device may use, based on the second offset, the second offset in the 1^{st} cycle and the 2^{nd} cycle after a moment at which the fourth indication information is received, and shift start time of the cycles backward.

For example, if the start time information of the cycle indicated by the third indication information includes the target start moment and using the target start moment in three cycles, when receiving the fourth indication information, the terminal device may use the target start moment as start time of consecutive three cycles after receiving the fourth indication information. Alternatively, if the start time information of the cycle indicates the target start moment, to shift the start moment of the cycle backward, and three bits of information, where a value of each bit of information is 1 (which indicates to use the target start moment in consecutive three cycles), when receiving the fourth indication information, the terminal device may use the target start moment as start time of the consecutive three cycles after receiving the fourth indication information.

Alternatively, if the start time information of the cycle indicates the target start moment, and three bits of information, where both values of 1^{st} bit of information and 2^{nd} bit of information are 1 (which indicates to use the target start moment in a 1^{st} cycle or a 2^{nd} cycle), and a value of 3^{rd} bit of information is 0 (which indicates not to use the target start moment in a 3^{rd} cycle), when receiving the fourth indication information, the terminal device may use the target start moment as start time of the 1^{st} cycle and the 2^{nd} cycle after a moment at which the fourth indication information is received.

For example, the start time information of the cycle indicated by the third indication information includes the start time of the cycle, and the start time of the cycle is used in three cycles. Optionally, the start time of the cycle may be used for indicating to start a cycle after an N^{th} subframe. When receiving the fourth indication information, the terminal device may apply the start time of the cycle to consecutive three cycles after receiving the fourth indication information. Alternatively, if the start time information of the cycle indicates the start time of the cycle, and three bits of information, where a value of each bit of information is 1 (which indicates to use the start time of the cycle in consecutive three cycles), when receiving the fourth indication information, the terminal device may use the start time of the cycle as start time of the consecutive three cycles after receiving the fourth indication information.

Alternatively, if the start time information of the cycle indicates the start time of the cycle, and three bits of information, where both values of 1^{st} bit of information and 2^{nd} bit of information are 1 (which indicates to use the start time of the cycle in a 1^{st} cycle or a 2^{nd} cycle), and a value of 3^{rd} bit of information is 0 (which indicates not to use the start time of the cycle in a 3^{rd} cycle), when receiving the fourth indication information, the terminal device may use the start time of the cycle as start time of the 1^{st} cycle and the 2^{nd} cycle after a moment at which the fourth indication information is received. It should be understood that starting the cycle after the N^{th} subframe may be starting the cycle at the N^{th} subframe or starting the cycle after N subframes.

For example, as shown in FIG. 9, if the third indication information indicates the second offset, to shift the start time of the cycle backward, and to shift next three cycles, the second offset is used in consecutive three cycles after the fourth indication information is received, and the start time of the cycle is shifted backward by a moment corresponding to the second offset.

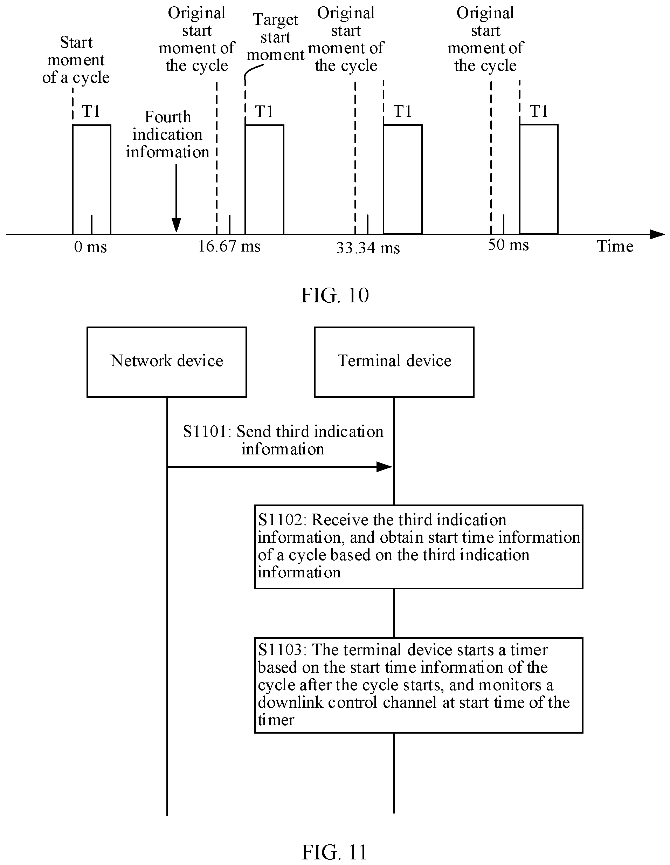

For example, as shown in FIG. 10, if the third indication information indicates the target start moment, and to use the target start moment in next three cycles, the target start moment is used as start time of consecutive three cycles after the fourth indication information is received.

When the terminal device uses the second offset in a cycle, in the related technology, drx-startOffset (a second preset offset) is defined as a subframe at which the cycle starts. Therefore, when the terminal device uses the second offset in start time of a cycle, the following two possible implementations may be included.

In a first possible implementation, when using the second offset in the start time of the cycle, the terminal device does not need to use drx-startOffset, that is, the terminal device needs to use only the second offset.

In a second possible implementation, when using the second offset in the start time of the cycle, the terminal device needs to use drx-startOffset, that is, the terminal device needs to use the second offset and drx-startOffset in the start time of the cycle.

Because the start time of the cycle may be shifted backward or forward, the following separately describes a manner of determining the start time of the cycle based on the second offset in different scenarios.

In a first possible implementation, the start time of the cycle is shifted backward.

When obtaining the second offset, if the terminal device uses only the second offset, the start time of the cycle is corresponding time obtained by shifting original start time of the cycle backward by the second offset. For example, if the original start time of the cycle is that the cycle starts at a 2^{nd} subframe, and the second offset is one subframe, shifted start time of the cycle is a 3^{rd} subframe.

In a second possible implementation, the start time of the cycle is shifted backward.

When obtaining the second offset, if the terminal device uses the second offset and drx-startOffset, shifted start time of the cycle is corresponding time obtained by performing shifting backward by a fifth value (the fifth value=drx-startOffset+the second offset). For example, if original start time is a 0^{th} frame, the second offset is one subframe, and drx-startOffset indicates that the cycle starts at a 3^{rd} subframe, the shifted start time of the cycle is a 4^{th} subframe.

In a third possible implementation, the start time of the cycle is shifted forward.

When obtaining the second offset, if the terminal device uses only the second offset, shifted start time of the cycle is corresponding time obtained by shifting original start time of the cycle forward by the second offset. For example, if the original start time of the cycle is that the cycle starts at a 2^{nd} subframe, and the second offset is one subframe, the shifted start time of the cycle is a 1^{st} subframe.

In a fourth possible implementation, the start time of the cycle is shifted forward.

When obtaining the second offset, if the terminal device uses the second offset and drx-startOffset, the start time of the cycle is corresponding time obtained by performing shifting forward by a sixth value (drx-startOffset-the second offset). For example, if the second offset is one subframe, original start time is a 0^{th} subframe, and drx-startOffset indicates that the cycle starts at a 3^{rd} subframe, shifted start time of the cycle is a 2^{nd} subframe.

When the terminal device uses the start time of the cycle in a cycle, in the related technology, drx-startOffset is defined as a subframe at which the cycle starts. Therefore, when the terminal device uses the start time of the cycle in a cycle or starts a cycle after an N^{th} subframe, the following two possible implementations may also be included.

In a first possible implementation, when using the start time of the cycle in a cycle, the terminal device does not need to use drx-startOffset, that is, the terminal device needs to use only the start time of the cycle or start the cycle only after the N^{th} subframe. For example, the target start moment or N is used.

In a second possible implementation, when using the target start moment in a cycle, the terminal device needs to use drx-startOffset, that is, the terminal device needs to use the start time of the cycle and drx-startOffset or start the cycle after the N^{th} subframe and use drx-startOffset. For example, the target start moment and drx-startOffset are used or N and drx-startOffset are used.

In the first possible implementation,
when obtaining the target start moment, if the terminal device uses only the target start moment, the terminal device uses the obtained target start moment as the start time of the cycle. For example, if the obtained target start moment is a 2^{nd} subframe, the start time of the cycle is the 2^{nd} subframe.

Alternatively, when obtaining the start time of the cycle, the terminal device uses only the start time of the cycle. For example, the obtained start time of the cycle is a 20^{th} subframe, the start time of the cycle is time corresponding to the 20^{th} subframe.

In the second possible implementation,
when obtaining the target start moment, if the terminal device uses the target start moment and drx-startOffset, the start time of the cycle is time corresponding to a seventh value (the seventh value=drx-startOffset+the target start moment). For example, the target start moment is a 3^{rd} subframe, and drx-startOffset indicates that the cycle starts at a 1^{st} subframe, the start time of the cycle is a 4^{th} subframe.

Alternatively, when obtaining the start time of the cycle, if the terminal device uses the start time of the cycle and drx-startOffset, the start time of the cycle is time corresponding to a seventh value (the seventh value=drx-startOffset+the start time of the cycle, where the start time of the cycle may be N) For example, the start time of the cycle is that the cycle starts after 20 subframes, and drx-startOffset indicates that the cycle starts at a 1^{st} subframe, the start time of the cycle is time corresponding to a 21^{st} subframe.

In some embodiments, whether to use drx-startOffset may be a default rule, or may be indicated by using indication information. For example, the third indication information carries indication information indicating whether to use drx-startOffset, the fourth indication information carries indication information indicating whether to use drx-startOffset, or new indication information is defined to indicate whether to use drx-startOffset. This is not limited in this embodiment of this application.

When determining the cycle in which the second offset is to be used and the shifting direction of the cycle and determining shifted start time of the cycle based on the second offset, the terminal device may start a timer, or when a corresponding cycle starts based on the target start moment or the start time of the cycle, the terminal device may start a timer, a DRX cycle enters an active period, and the terminal device starts monitoring a PDCCH and receives XR data. The start time of the cycle may be used for indicating to start a cycle after an N^{th} subframe. For example, if the start time of the cycle is N, it indicates to start the cycle after an N^{th} subframe.

According to the communication method provided in this embodiment of this application, the terminal device receives time information of a cycle sent by the network device and adjusts start time of one or more cycles based on the time information of the cycle. When jitter occurs on XR data, delivering time of the XR data may be aligned with start time of a cycle, to reduce a probability that the delivering time of the XR data does not match the start time of the cycle due to jitter occurring on the XR data, and consequently the terminal device cannot receive the XR data at the start time of the timer, resulting in a waste of power consumption of the terminal device.

It should be understood that in this embodiment of this application, S801 and S803 are actions performed by the network device, and S802, S804, and S805 are actions performed by the terminal device. For the entire procedure, S801 is an optional step, that is, when receiving the fourth indication information from the network device, the terminal device may adjust the start time of the cycle.

Based on the foregoing embodiments, when the terminal device determines the start time of the cycle based on the time information of the cycle, and starts a timer after the cycle starts, a start condition of the timer further needs to be met.

In some embodiments, a timer have different start conditions based on configuration information of different DRX cycles.

The following separately describes start conditions under configuration information of different DRX cycles.

In a possible implementation, if a DRX cycle is a short cycle, and the short cycle is an integer cycle, and if the following formula is satisfied, the terminal device may start a timer when the cycle starts. Content related to starting of the timer may be combined with the start moment or the active time of the timer in the embodiment shown in FIG. 4. 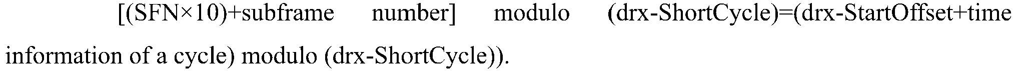 [(SFN×10)+subframe number] modulo (drx-ShortCycle)=(drx-StartOffset+time information of a cycle) modulo (drx-ShortCycle)).
or 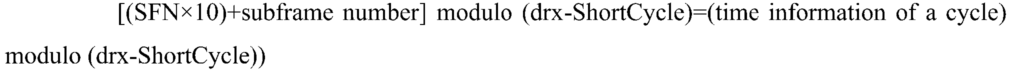 [(SFN×10)+subframe number] modulo (drx-ShortCycle)=(time information of a cycle) modulo (drx-ShortCycle))

In a possible implementation, if a DRX cycle is a short cycle, and the short cycle is a non-integer cycle, and if the following formula is satisfied, the terminal device may start a timer when the cycle starts: 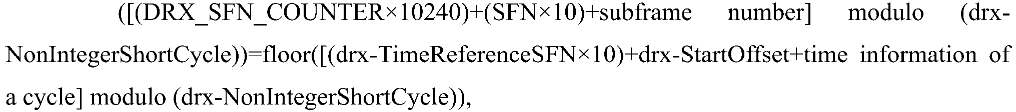 ([(DRX_SFN_COUNTER×10240)+(SFN×10)+subframe number] modulo (drx-NonIntegerShortCycle))=floor([(drx-TimeReferenceSFN×10)+drx-StartOffset+time information of a cycle] modulo (drx-NonIntegerShortCycle)),
or 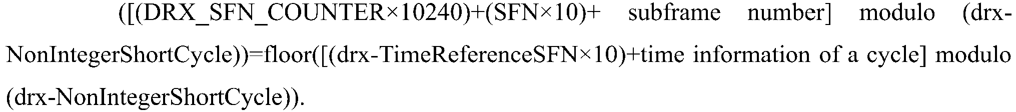 ([(DRX_SFN_COUNTER×10240)+(SFN×10)+ subframe number] modulo (drx-NonIntegerShortCycle))=floor([(drx-TimeReferenceSFN×10)+time information of a cycle] modulo (drx-NonIntegerShortCycle)).

In a possible implementation, if a DRX cycle is a long cycle, and the long cycle is an integer cycle, and if the following formula is satisfied, the terminal device may start a timer when the cycle starts: 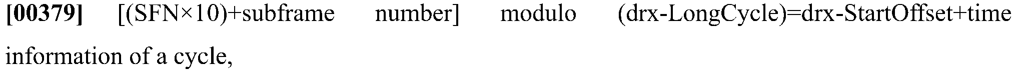 [(SFN×10)+subframe number] modulo (drx-LongCycle)=drx-StartOffset+time information of a cycle,
or
$\left[\left(SFN\times 10\right)+subframe number\right] modulo \left(drx-LongCycle\right) = time information of a cycle .$

In a possible implementation, if a DRX cycle is a long cycle, and the long cycle is a non-integer cycle, and if the following formula is satisfied, the terminal device may start a timer when the cycle starts: 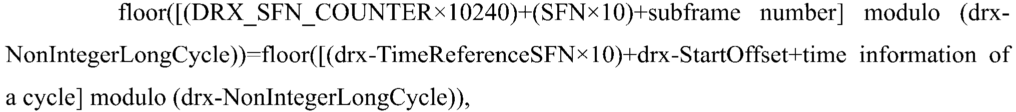 floor([(DRX_SFN_COUNTER×10240)+(SFN×10)+subframe number] modulo (drx-NonIntegerLongCycle))=floor([(drx-TimeReferenceSFN×10)+drx-StartOffset+time information of a cycle] modulo (drx-NonIntegerLongCycle)),
or 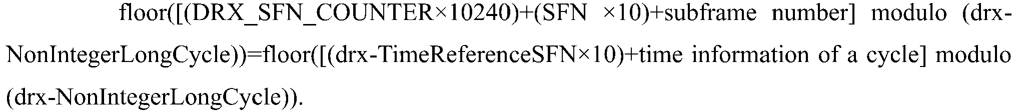 floor([(DRX_SFN_COUNTER×10240)+(SFN ×10)+subframe number] modulo (drx-NonIntegerLongCycle))=floor([(drx-TimeReferenceSFN×10)+time information of a cycle] modulo (drx-NonIntegerLongCycle)).

It should be understood that the time information of the cycle may be the target start moment or the start time information of the cycle based on the second offset. Meanings of other parameters in the foregoing formulas are the same as the meanings of the parameters in the foregoing formulas in the embodiment shown in FIG. 4. Details are not described herein again.

In some embodiments, the foregoing formulas may be further transformed. For example, a coefficient is added to the shifted start time of the cycle.

For example, if a DRX cycle is a short cycle, and the short cycle is an integer cycle, and if the following formula is satisfied, the terminal device may start a timer when the cycle starts: 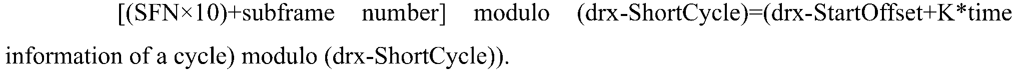 [(SFN×10)+subframe number] modulo (drx-ShortCycle)=(drx-StartOffset+K*time information of a cycle) modulo (drx-ShortCycle)).

K is a coefficient determined based on priori knowledge, or an adjustment coefficient sent by a network side. In an implementation, the time information of the cycle may be drx-StartOffset.

It should be understood that other start conditions under configuration information of different DRX cycles are similar to the foregoing formulas. Details are not described herein again.

In the foregoing embodiments, the network device configures the time information of the cycle for the terminal device by using the third indication information, and indicates, by using the fourth indication information, the terminal device to use the time information of the cycle to adjust the start time of the cycle, so that the start time of the cycle is aligned with transmission of the XR data. In other words, the time information of the cycle is preconfigured information. If the terminal device does not receive the fourth indication information sent by the network device, the terminal device does not use the time information of the cycle, and a solution in which the start time of the cycle is determined in a conventional manner is described.

In some embodiments, the time information of the cycle may alternatively be information configured in real time, and the network device does not need to indicate, by using subsequent indication information, the terminal device to use the offset information. In other words, when receiving the time information of the cycle, the terminal device may use the time information of the cycle in a subsequent cycle without waiting for subsequent indication information for activation and use. The following describes, with reference to FIG. 10, a solution in which start time of a subsequent cycle is directly adjusted based on received time information of the cycle.

FIG. 11 is a schematic flowchart 2 of a communication method according to an embodiment of this application. As shown in FIG. 11, the method includes the following steps.

S1101: A network device sends third indication information to a terminal device.

In some embodiments, the third indication information is used for indicating time information of one or more cycles. The third indication information is further used for indicating to use time information of a cycle.

Optionally, the time information of the cycle may be offset information related to start time of the cycle, or the time information of the cycle may be start time information of the cycle.

In an implementation, the third indication information directly indicates time information of one or more cycles, or directly indicates time information of a next cycle or next more cycles.

The offset information may be used for indicating offset information related to start time of one cycle or indicating offset information related to start time of N cycles.

The start time information of the cycle indicates start time information of one cycle or start time information of N cycles.

Optionally, the offset information may alternative be used for indicating a second offset of start time of one or more cycles. The offset information may alternatively be used for indicating to shift start time of a cycle backward or forward.

Optionally, the start time information of the cycle may be used for indicating a target start moment of one or more cycles, or the start time information of the cycle is start time of a cycle by using a subframe as a unit.

It should be understood that an implementation in which the third indication information indicates the time information of the cycle and indicates to use the time information of the cycle is similar to that in S801 in the embodiment shown in FIG. 8. Details are not described herein again.

It should be understood that a manner of sending the third indication information by the network device is similar to that in S801 in the embodiment shown in FIG. 8. Details are not described herein again.

S1102: The terminal device receives the third indication information sent by the network device and obtains the start time information of the cycle based on the third indication information.

When receiving the third indication information, the terminal device may extract the time information of the cycle from the third indication information, and after receiving the third indication information, the terminal device uses the time information of the cycle in a next cycle or next M cycles, where M is an integer greater than 1.

S1103: The terminal device starts a timer based on the time information of the cycle after the cycle starts, and monitors a downlink control channel at start time of the timer.

Optionally, when receiving the third indication information, the terminal device may determine, based on the offset information in the third indication information, a cycle in which the offset information is to be used, a shifting direction of start time of the cycle, and start time of the cycle in which the offset information is used, and adjust the start time of the cycle. A specific implementation thereof is similar to the implementation of S805 in the embodiment shown in FIG. 8. Details are not described herein again.

Alternatively, when receiving the third indication information, the terminal device may determine, based on the start time information of the cycle in the third indication information, to use the target start moment or the start time of the cycle by using a subframe as a unit, a cycle in which the target start moment is to be used, or a cycle in which the start time of the cycle by using the subframe as a unit is to be used, and adjust the start time of the cycle. A specific implementation thereof is similar to the implementation of S805 in the embodiment shown in FIG. 8. Details are not described herein again.

It should be understood that when shifting the start time of the cycle by using the offset information in the cycle, or when determining the start time of the cycle based on the start time information of the cycle, the terminal device also needs to determine whether to use drx-startOffset. A specific implementation thereof is similar to the implementation of S805. Details are not described herein again.

The terminal device starts the timer when the cycle whose start time is shifted starts, and a DRX cycle enters an active period. The terminal device starts monitoring a PDCCH and receives XR data.

It should be understood that in this embodiment of this application, when a timer is started, a start condition of the timer also needs to be met. For the start condition of the timer, refer to the start condition described in the foregoing embodiments. Details are not described herein again.

It should be understood that a difference between the embodiment shown in FIG. 8 and the embodiment shown in FIG. 11 lies in as follows.

In the embodiment shown in FIG. 8, the third indication information and the fourth indication information may be jointly used for indicating the offset information of the start time of the cycle and enable information, or the start time information of the cycle and enable information. After receiving the fourth indication information, the terminal device applies the offset information or the start time information in a subsequent cycle.

In the embodiment shown in FIG. 11, the third indication information is used for indicating the offset information of the start time of the cycle and enable information or the start time information of the cycle and enable information. After receiving the third indication information, the terminal device applies the offset information or the start time information in a subsequent cycle.

It should be understood that in the foregoing embodiments, the third indication information and the fourth indication information may be messages of a same type and sent to the terminal device by using same signaling, the third indication information and the fourth indication information may be messages of a same type and sent to the terminal device by using different signaling, the third indication information and the fourth indication information may be messages of a same type and sent to the terminal device by using different signaling, or the third indication information and the fourth indication information may be messages of different types and sent to the terminal device by using different signaling. This is not limited in this embodiment of this application.

In the foregoing embodiments, the technical solutions in which the network device sends the offset information of the start time of the timer to the terminal device and the network device sends the time information of the cycle to the terminal device are separately described. When jitter occurs on XR data, the terminal device may shift the start time of the timer based on the offset information of the start time of the timer, or adjust the start time of the cycle based on the time information of the cycle, to better receive the XR data.

Based on the foregoing embodiments, the network device may alternatively send both the offset information of the start time of the timer and the time information of the cycle to the terminal device, and the terminal device may shift the start time of the cycle and the start time of the timer in a DRX cycle, so that the DRX cycle of the terminal device better matches transmission of the XR data. In other words, the technical solutions provided in the foregoing several embodiments may be combined with each other.

For example, the network device may send the start time information of the cycle and the offset information of the timer to the terminal device by using the first indication information or the third indication information. The terminal device adjusts the start time of the cycle based on the start time information of the cycle and shifts the start time of the timer based on the offset information of the timer when starting the timer in an adjusted cycle.

It should be understood that an implementation in which the network device sends the start time information of the cycle and the offset information of the timer to the terminal device, and the terminal device shifts the start time of the cycle and the start time of the timer based on the start time information of the cycle and the offset information of the timer is similar to the implementation in the foregoing embodiments. Details are not described herein again.

The communication method in the embodiments of this application is described above. An apparatus for performing the communication method provided in the embodiments of this application is described below. It may be understood by a person skilled in the art that the method and the apparatus may be combined and mutual reference may be made, and that a related apparatus provided in embodiments of this application may perform the steps of the foregoing communication method.

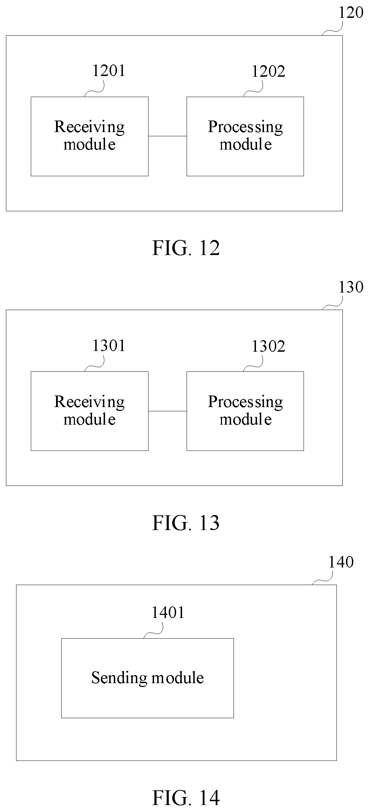

FIG. 12 is a schematic diagram of a structure of a communication apparatus 120 according to an embodiment of this application. As shown in FIG. 12, the communication apparatus includes:
a receiving module 1201, configured to receive first indication information, where the first indication information is used for indicating offset information of a discontinuous reception timer, and the offset information is related to a start moment of one or more discontinuous reception timers; and
a processing module 1202, configured to monitor a downlink control channel at start time of the discontinuous reception timer.

In some embodiments, the offset information includes a first offset of a start moment of the discontinuous reception timer.

In some embodiments, the receiving module 1201 is further configured to receive second indication information, where the second indication information is used for indicating to use the first offset.

In some embodiments, the first indication information is further used for indicating the first offset in a next discontinuous reception timer when the first indication information is received; or the first indication information is further used for indicating to use the first offset in next N discontinuous reception timers when the first indication information is received, where N is an integer greater than 1.

In some embodiments, the second indication information is further used for indicating to use the first offset in a next discontinuous reception timer when the second indication information is received; or the second indication information is further used for indicating to use the first offset in next N discontinuous reception timers when the second indication information is received, where N is an integer greater than 1.

In some embodiments, the processing module 1202 is further configured to determine a start moment of the discontinuous reception timer based on the first offset, or determine a start moment of the discontinuous reception timer based on the first offset and a first preset offset.

In some embodiments, the offset information is further used for indicating to shift the start moment of the discontinuous reception timer forward, or shift the start moment of the discontinuous reception timer backward.

In some embodiments, the processing module 1202 is further configured to: after a subframe of a discontinuous reception cycle starts, perform shifting by the first offset or perform shifting by the first offset and the first preset offset, and start the discontinuous reception timer, where the subframe is determined based on a configuration of the discontinuous reception cycle.

In some embodiments, a time unit granularity of the first offset includes any one of the following:
a millisecond, a subframe, a slot, and a symbol.

In some embodiments, the processing module 1202 is further configured to configure a new timer to replace the discontinuous reception timer.

The communication apparatus in this embodiment may be configured to execute the technical solutions performed by the terminal device in the embodiment shown in FIG. 4 and FIG. 7. Principles and technical effects are similar. Details are not described herein again.

FIG. 13 is a schematic diagram of a structure of a communication apparatus 130 according to an embodiment of this application. As shown in FIG. 13, the communication apparatus includes:
a receiving module 1301, configured to receive third indication information, where the third indication information is used for indicating start time information of a discontinuous reception cycle, and the start time information is related to a start moment of one or more discontinuous reception cycles.

In some embodiments, the start time information includes offset information of a start moment of the discontinuous reception cycle, or start moment information of the discontinuous reception cycle.

In some embodiments, the offset information includes a second offset of a start moment of the discontinuous reception cycle.

In some embodiments, the start moment information includes a target start moment of the discontinuous reception cycle.

The receiving module 1301 is further configured to receive fourth indication information, where the fourth indication information is used for indicating to use the second offset or use the target start moment.

In some embodiments, the third indication information is further used for indicating to use the second offset or use the target start moment in a next discontinuous reception cycle when the third indication information is received.

In some embodiments, the third indication information is further used for indicating to use the second offset or use the target start moment in next M discontinuous reception cycles when the third indication information is received, where M is an integer greater than 1.

In some embodiments, the fourth indication information is further used for indicating to use the second offset or use the target start moment in a next discontinuous reception cycle when the fourth indication information is received.

In some embodiments, the fourth indication information is further used for indicating to use the second offset or use the target start moment in next M discontinuous reception cycles when the fourth indication information is received, where M is an integer greater than 1.

In some embodiments, the communication apparatus 130 further includes a processing module 1302.

In some embodiments, the processing module 1302 is configured to determine a start moment of the discontinuous reception cycle based on the second offset or the target start moment.

In some embodiments, the processing module 1302 is further configured to determine a start moment of the discontinuous reception cycle based on the second offset and a second preset offset or based on the target start moment and a second preset offset.

In some embodiments, a time unit granularity of the second offset includes any one of the following:
a millisecond, a subframe, a slot, and a symbol.

In some embodiments, the processing module 1302 is further configured to start a discontinuous reception timer in the discontinuous reception cycle.

In some embodiments, the processing module 1302 is further configured to determine, based on a configuration parameter of the discontinuous reception cycle and the second offset, whether to start the discontinuous reception timer, where the configuration parameter includes at least one of a cycle configuration, a system frame number, a subframe number, a cycle type, a slot offset of a cycle, and system frame reference time.

The communication apparatus in this embodiment may be configured to execute the technical solutions performed by the terminal device in the embodiments shown in FIG. 8 and FIG. 11. Principles and technical effects are similar. Details are not described herein again.

FIG. 14 is a schematic diagram of a structure of a communication apparatus 140 according to an embodiment of this application. As shown in FIG. 14, the communication apparatus includes:
a sending module 1401, configured to send first indication information, where the first indication information is used for indicating offset information of a discontinuous reception timer, and the offset information is related to a start moment of one or more discontinuous reception timers.

In some embodiments, the offset information includes a first offset of a start moment of the discontinuous reception timer.

In some embodiments, the sending module 1401 is further configured to send second indication information, where the second indication information is used for indicating to use the first offset.

In some embodiments, the first indication information is further used for indicating the first offset in a next discontinuous reception timer when the first indication information is received.

In some embodiments, the first indication information is further used for indicating to use the first offset in next N discontinuous reception timers when the first indication information is received, where N is an integer greater than 1.

In some embodiments, the second indication information is further used for indicating to use the first offset in a next discontinuous reception timer when the second indication information is received.

In some embodiments, the second indication information is further used for indicating to use the first offset in next N discontinuous reception timers when the second indication information is received, where N is an integer greater than 1.

In some embodiments, the offset information is further used for indicating to shift the start moment of the discontinuous reception timer forward, or shift the start moment of the discontinuous reception timer backward.

In some embodiments, a time unit granularity of the first offset includes any one of the following:
a millisecond, a subframe, a slot, and a symbol.

The communication apparatus in this embodiment may be configured to execute the technical solutions performed by the network device in the embodiments shown in FIG. 4 and FIG. 7. Principles and technical effects are similar. Details are not described herein again.

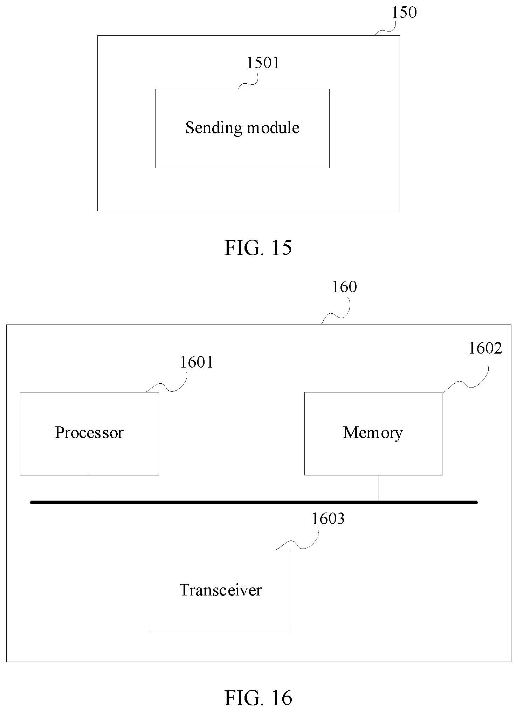

FIG. 15 is a schematic diagram of a structure of a communication apparatus 150 according to an embodiment of this application. As shown in FIG. 15, the communication apparatus includes:
a sending module 1501, configured to send third indication information, where the third indication information is used for indicating start time information of a discontinuous reception cycle, and the start time information is related to a start moment of one or more discontinuous reception cycles.

In some embodiments, the start time information includes offset information of a start moment of the discontinuous reception cycle, or start moment information of the discontinuous reception cycle.

In some embodiments, the offset information includes a second offset of the start moment of the discontinuous reception cycle.

In some embodiments, the start moment information includes a target start moment of the discontinuous reception cycle.

In some embodiments, the sending module 1501 is further configured to send fourth indication information, where the fourth indication information is used for indicating to use the second offset or use the target start moment.

In some embodiments, the third indication information is further used for indicating to use the second offset or use the target start moment in a next discontinuous reception cycle when the third indication information is received; or the third indication information is further used for indicating to use the second offset or use the target start moment in next M discontinuous reception cycles when the third indication information is received, where M is an integer greater than 1.

In some embodiments, the fourth indication information is further used for indicating to use the second offset or use the target start moment in a next discontinuous reception cycle when the fourth indication information is received; or the fourth indication information is further used for indicating to use the second offset or use the target start moment in next M discontinuous reception cycles when the fourth indication information is received, where M is an integer greater than 1.

In some embodiments, a time unit granularity of the second offset includes any one of the following:
a millisecond, a subframe, a slot, and a symbol.

The communication apparatus in this embodiment may be configured to execute the technical solutions performed by the network device in the embodiments shown in FIG. 8 and FIG. 11. Principles and technical effects are similar. Details are not described herein again.

An embodiment of this application further provides a communication device.

FIG. 16 is a schematic diagram of a structure of a communication device according to an embodiment of this application. As shown in FIG. 16, the communication device 160 may include: at least one processor 1601, a memory 1602, and a transceiver 1603. The processor 1601, the transceiver 1603, and the memory 1602 communicate with each other through an internal connection path. The memory 1602 is configured to store instructions. The processor 1601 is configured to execute the instructions stored in the memory 1602, to control the transceiver 1603 to send a channel/a signal and/or receive a channel/a signal.

It should be understood that the communication device may correspond to the terminal device in the foregoing method embodiments, or may correspond to the network device in the foregoing method embodiments. In addition, the communication device may be configured to perform various steps and/or procedures performed by the terminal device or the network device in the foregoing method embodiments. Optionally, the memory 1602 may include a read-only memory and a random access memory, and provides instructions and data to the processor 1601. A part of the storage 1602 may further include a non-volatile random access memory. The memory 1602 may be an independent component, or may be integrated into the processor 1601. The processor 1601 may be configured to execute the instructions stored in the memory 1602, and when the processor 1601 executes the instructions stored in the memory, the processor 1601 is configured to perform the steps and/or the procedures in the foregoing method embodiments.

The transceiver 1603 may include a transmitter and a receiver. The transceiver 1603 may further include an antenna, and a quantity of the antenna can be one or more. The processor 1601, the memory 1602, and the transceiver 1603 may be devices integrated on different chips. For example, the processor 1601 and the memory 1602 may be integrated into a baseband chip, and the transceiver 1603 may be integrated into a radio frequency chip. The processor 1601, the memory 1602, and the transceiver 1603 may alternatively be devices integrated on a same chip. This is not limited in this application.

Optionally, the communication device is a component configured in a terminal device or a radio access network device, for example, a chip or a chip system.

The transceiver 1603 may also be a communication interface, such as an input/output interface or a circuit. The transceiver 1603, the processor 1601, and the memory 1602 may all be integrated into a same chip, for example, integrated into a baseband chip.

An embodiment of this application further provides a computer-readable storage medium, storing a computer program. When the computer program is executed by a processor, the technical solutions performed by the terminal device or the network device in the communication method embodiments are implemented. Implementation principles and technical effects are similar. Details are not described herein again.

In a possible implementation, the computer-readable medium may include a random access memory (random access memory, RAM), a read-only memory (read-only memory, ROM), a compact disc read-only memory (compact disc read-only memory, CD-ROM) or another optical disk memory, a magnetic disk memory or another magnetic storage device, or any other medium that is to carry or store required program code in a form of an instruction or a data structure, and may be accessed by a computer. In addition, any connection is appropriately referred to as a computer-readable medium. For example, if software is transmitted from a website, a server or another remote source by using a coaxial cable, an optical fiber cable, a twisted pair, a digital subscriber line (Digital Subscriber Line, DSL) or wireless technologies (such as infrared ray, radio, and microwave), the coaxial cable, optical fiber cable, twisted pair, DSL or wireless technologies such as infrared ray, radio, and microwave are included in the definition of the medium. A magnetic disk and an optical disc used herein include an optical disc, a laser disc, an optical disc, a digital versatile disc (Digital Versatile Disc, DVD), a floppy disk, and a blue ray disc, where the magnetic disk generally reproduces data in a magnetic manner, and the optical disc reproduces data optically by using laser. A combination of the foregoing should also be included in the scope of the computer-readable medium.

An embodiment of this application further provides a computer program product, storing a computer program. When the computer program is executed by a processor, the technical solutions performed by the terminal device or the network device in the communication method embodiments are implemented. Implementation principles and technical effects are similar. Details are not described herein again.

An embodiment of this application provides a chip or chip system, where the chip or chip system includes at least one processor and a communication interface. The communication interface and the at least one processor are interconnected by using a line, and the at least one processor is configured to run a program or instructions, so as to perform the technical solution performed by the terminal device or the network device in the foregoing method embodiment. Implementation principles and technical effects thereof are similar. Details are not described herein again. The communication interface in the chip may be an input/output interface, a pin, a circuit, or the like.

In a possible implementation, the chip or chip system described above in this application further includes at least one memory, and the at least one memory has instructions stored therein. The memory may be a storage unit, for example, a register or a cache, inside the chip, or may be a storage unit (for example, a read-only memory or a random access memory) of the chip.

In a specific implementation of the terminal device or the network device, it should be understood that the processor may be a central processing unit (English: Central Processing Unit, CPU for short), or may be another general-purpose processor, a digital signal processor (English: Digital Signal Processor, DSP for short), an application-specific integrated circuit (English: Application Specific Integrated Circuit, ASIC for short), or the like. The general-purpose processor may be a microprocessor, or the processor may be any conventional processor or the like. The steps of the methods disclosed with reference to embodiments of this application may be directly performed and completed by a hardware processor, or may be performed and completed by a combination of hardware and software modules in the processor.

A person of ordinary skill in the art may understand that all or some steps in any one of the foregoing method embodiments may be completed by using hardware related to program instructions. The program may be stored in a computer-readable storage medium. When the program is executed, all or some steps in the foregoing method embodiments are executed.

When the technical solutions of this application are implemented in a form of software and sold or used as an independent product, the technical solutions may be stored in a computer-readable storage medium. Based on such an understanding, all or some of the technical solutions of this application may be reflected in a form of a software product, and the computer software product is stored in a storage medium and includes a computer program or a plurality of instructions. The computer software product causes a computer device (which may be a personal computer, a server, a network device, or the like) to perform all or some of the steps of the methods in the embodiments of this application.

It should be noted that for brief description, the foregoing method embodiments are redisplayed as a series of action combinations. However, a person skilled in the art is to appreciate that this application is not limited to the described order of the actions, because according to this application, some steps may be performed in other orders or simultaneously. Secondarily, a person skilled in the art shall know that the embodiments described in the specification all belong to optional embodiments and the related actions and modules are not necessary for this application.

It should be further noted that, although the steps in the flowchart are sequentially shown according to indication of an arrow, the steps are not necessarily sequentially performed according to a sequence indicated by the arrow. Unless otherwise explicitly specified in this application, execution of the operations is not strictly limited, and the operations may be performed in other sequences. In addition, at least some steps in the flowcharts may include a plurality of substeps or a plurality of stages. The substeps or the stages are not necessarily performed at the same moment, but may be performed at different moments. The substeps or the stages are not necessarily performed in sequence, but may be performed in turn or alternately with another step or at least some of substeps or stages of the another step.

It should be understood that the foregoing apparatus embodiments are merely an example, and the apparatus of this application may alternatively be implemented in another manner. For example, division of the units/modules in the foregoing embodiments is merely logical function division, and there may be other division modes during actual implementation. For example, a plurality of units, modules, or components may be combined or integrated into another system, or some features may be omitted or not performed.

In addition, if not especially described, functional units/modules in embodiments of this application may be integrated into one unit/module, each of the functional units/modules may exist alone physically, or two or more units/modules may be integrated into one unit/module. The foregoing integrated unit/module may be implemented in a form of hardware, or may be implemented in a form of a software program module.

If the integrated unit/module is implemented in the form of the hardware, the hardware may be a digital circuit, an analog circuit, or the like. A physical implementation of a hardware structure includes but is not limited to a transistor, a memristor, and the like. If not especially described, the processor may be any appropriate hardware processor, for example, a CPU, a GPU, an FPGA, a DSP, or an ASIC. If not especially described, the storage unit may be any appropriate magnetic storage medium or magneto-optical storage medium, for example, a resistive random access memory RRAM (Resistive Random Access Memory), a dynamic random access memory DRAM (Dynamic Random Access Memory), a static random access memory SRAM (Static Random-Access Memory), an enhanced dynamic random access memory EDRAM (Enhanced Dynamic Random Access Memory), a high bandwidth memory HBM (High-Bandwidth Memory), or a hybrid memory cube HMC (Hybrid Memory Cube).

When the integrated unit/module is implemented in the form of a software program module and sold or used as an independent product, the integrated unit/module may be stored in a computer-readable memory. Based on such an understanding, the technical solutions of this application essentially, or the part contributing to the related technology, or all or some of the technical solutions may be implemented in a form of a software product. The computer software product is stored in a memory and includes several instructions for instructing a computer device (which may be a personal computer, a server, a network device, or the like) to perform all or some of the steps of the methods described in the embodiments of this application. The foregoing memory includes: any medium that can store program code, such as a USB flash drive, a read-only memory (ROM, Read-Only Memory), a random access memory (RAM, Random Access Memory), a removable hard disk, a magnetic disk, or a compact disc.

In the foregoing embodiments, description of each embodiment focuses on a different part, and for parts that are not described in detail in one embodiment, reference may be made to the related description of other embodiments. The technical features in the foregoing embodiments may be randomly combined. For concise description, not all possible combinations of the technical features in the embodiments are described. However, provided that combinations of the technical features do not conflict with each other, the combinations of the technical features are considered as falling within the scope described in this specification.

The objectives, technical solutions, and beneficial effects of the present invention are further described in detail in the foregoing specific implementations. It should be understood that the foregoing descriptions are merely specific implementations of the present invention, but are not intended to limit the protection scope of the present invention. Any modification, equivalent replacement, or improvement made based on the technical solutions in the present invention shall fall within the protection scope of the present invention.

## Claims

1. A communication method, comprising:
receiving first indication information, wherein the first indication information is used for indicating offset information of a discontinuous reception timer, and the offset information is related to a start moment of one or more discontinuous reception timers; and
monitoring a downlink control channel at start time of the discontinuous reception timer.

2. The method according to claim 1, wherein the offset information comprises a first offset of a start moment of the discontinuous reception timer.

3. The method according to claim 2, wherein the method further comprises:
receiving second indication information, wherein the second indication information is used for indicating to use the first offset.

4. The method according to claim 2, wherein the first indication information is further used for indicating the first offset in a next discontinuous reception timer when the first indication information is received; or
the first indication information is further used for indicating to use the first offset in next N discontinuous reception timers when the first indication information is received, wherein N is an integer greater than 1.

5. The method according to claim 3, wherein the second indication information is further used for indicating to use the first offset in a next discontinuous reception timer when the second indication information is received; or
the second indication information is further used for indicating to use the first offset in next N discontinuous reception timers when the second indication information is received, wherein N is an integer greater than 1.

6. The method according to any one of claims 1 to 5, wherein the offset information is further used for indicating to shift the start moment of the discontinuous reception timer forward, or shift the start moment of the discontinuous reception timer backward.

7. The method according to claim 6, wherein the method further comprises:
determining a start moment of the discontinuous reception timer based on the first offset, or determining a start moment of the discontinuous reception timer based on the first offset and a first preset offset.

8. The method according to claim 7, wherein the method further comprises:
after a subframe of a discontinuous reception cycle starts, performing shifting by the first offset or performing shifting by the first offset and the first preset offset, and starting the discontinuous reception timer, wherein the subframe is determined based on a configuration of the discontinuous reception cycle.

9. The method according to claim 8, a time unit granularity of the first offset comprises any one of the following:
a millisecond, a subframe, a slot, and a symbol.

10. A communication method, comprising:
receiving third indication information, wherein the third indication information is used for indicating time information of a discontinuous reception cycle, and the time information is related to start time of one or more discontinuous reception cycles.

11. The method according to claim 10, wherein the start time information comprises offset information of start time of the discontinuous reception cycle, or start time information of the discontinuous reception cycle.

12. The method according to claim 11, wherein the offset information comprises a second offset of the start time of the discontinuous reception cycle.

13. The method according to claim 12, wherein the start time information comprises a target start moment of the discontinuous reception cycle.

14. The method according to claim 13, wherein the method further comprises:
receiving fourth indication information, wherein the fourth indication information is used for indicating to use the second offset or use the target start moment.

15. The method according to claim 13, wherein the third indication information is further used for indicating to use the second offset or use the target start moment in a next discontinuous reception cycle when the third indication information is received; or
the third indication information is further used for indicating to use the second offset or use the target start moment in next M discontinuous reception cycles when the third indication information is received, wherein M is an integer greater than 1.

16. The method according to claim 14, wherein the fourth indication information is further used for indicating to use the second offset or use the target start moment in a next discontinuous reception cycle when the fourth indication information is received; or
the fourth indication information is further used for indicating to use the second offset or use the target start moment in next M discontinuous reception cycles when the fourth indication information is received, wherein M is an integer greater than 1.

17. The method according to claim 16, wherein the method further comprises:
determining a start moment of the discontinuous reception cycle based on the second offset or the target start moment; or
determining a start moment of the discontinuous reception cycle based on the second offset and a second preset offset or based on the target start moment and a second preset offset.

18. The method according to claim 17, wherein a time unit granularity of the second offset comprises any one of the following:
a millisecond, a subframe, a slot, and a symbol.

19. The method according to claim 18, wherein the method further comprises:
starting a discontinuous reception timer in the discontinuous reception cycle.

20. The method according to claim 19, wherein the method further comprises:
determining, based on a configuration parameter of the discontinuous reception cycle and the second offset, whether to start the discontinuous reception timer, wherein the configuration parameter comprises at least one of a cycle configuration, a system frame number, a subframe number, a cycle type, a slot offset of a cycle, and system frame reference time.

21. A communication method, comprising:
sending first indication information, wherein the first indication information is used for indicating offset information of a discontinuous reception timer, and the offset information is related to a start moment of one or more discontinuous reception timers.

22. The method according to claim 21, wherein the offset information comprises a first offset of a start moment of the discontinuous reception timer.

23. The method according to claim 22, wherein the method further comprises:
sending second indication information, wherein the second indication information is used for indicating to use the first offset.

24. The method according to claim 22, wherein the first indication information is further used for indicating the first offset in a next discontinuous reception timer when the first indication information is received; or
the first indication information is further used for indicating to use the first offset in next N discontinuous reception timers when the first indication information is received, wherein N is an integer greater than 1.

25. The method according to claim 23, wherein the second indication information is further used for indicating to use the first offset in a next discontinuous reception timer when the second indication information is received; or
the second indication information is further used for indicating to use the first offset in next N discontinuous reception timers when the second indication information is received, wherein N is an integer greater than 1.

26. The method according to claim 25, wherein the offset information is further used for indicating to shift the start moment of the discontinuous reception timer forward, or shift the start moment of the discontinuous reception timer backward.

27. The method according to claim 26, wherein a time unit granularity of the first offset comprises any one of the following:
a millisecond, a subframe, a slot, and a symbol.

28. A communication method, comprising:
sending third indication information, wherein the third indication information is used for indicating time information of a discontinuous reception cycle, and the time information is related to start time of one or more discontinuous reception cycle.

29. The method according to claim 28, wherein the start time information comprises offset information of start time of the discontinuous reception cycle, or start time information of the discontinuous reception cycle.

30. The method according to claim 29, wherein the offset information comprises a second offset of start time of the discontinuous reception cycle.

31. The method according to claim 30, wherein the start time information comprises a target start moment of the discontinuous reception cycle.

32. The method according to claim 31, wherein the method further comprises:
sending fourth indication information, wherein the fourth indication information is used for indicating to use the second offset or use the target start moment.

33. The method according to claim 31, wherein the third indication information is further used for indicating to use the second offset or use the target start moment in a next discontinuous reception cycle when the third indication information is received; or
the third indication information is further used for indicating to use the second offset or use the target start moment in next M discontinuous reception cycles when the third indication information is received, wherein M is an integer greater than 1.

34. The method according to claim 32, wherein the fourth indication information is further used for indicating to use the second offset or use the target start moment in a next discontinuous reception cycle when the fourth indication information is received; or
the fourth indication information is further used for indicating to use the second offset or use the target start moment in next M discontinuous reception cycles when the fourth indication information is received, wherein M is an integer greater than 1.

35. The method according to claim 34, wherein a time unit granularity of the second offset comprises any one of the following:
a millisecond, a subframe, a slot, and a symbol.

36. A communication device, comprising a processor and a memory, wherein
the memory stores computer-executable instructions; and
the processor executes the computer-executable instructions stored in the memory, to cause the terminal device to perform the method according to any one of claims 1 to 20.

37. A communication device, comprising a processor and a memory, wherein
the memory stores computer-executable instructions; and
the processor executes the computer-executable instructions stored in the memory, to cause the terminal device to perform the method according to any one of claims 21 to 35.

38. A computer-readable storage medium, storing a computer program, wherein when the computer program is executed by a processor, the method according to any one of claims 1 to 35 is implemented.

39. A computer program product, comprising a computer program, wherein when the computer program is run, a computer is caused to perform the method according to any one of claims 1 to 35.
